# EUROPEAN PATENT SPECIFICATION

(11) **EP 4 258 593 B1**
(45) Date of publication and mention of the grant of the patent: **04.11.2026**
(21) Application number: 20967255.9
(22) Date of filing: 28.12.2020
(51) Int. Cl.: H04L 9/08, G06F 8/65, G06F 21/57, H04L 9/40, H04L 67/00, H04L 67/06, H04L 9/14, H04W 4/40, H04W 4/50, H04L 41/082, H04L 41/0894, H04L 67/12, H04W 12/03, H04W 12/0431

(54) **OTA UPDATE METHOD AND APPARATUS**
OTA-AKTUALISIERUNGSVERFAHREN UND -VORRICHTUNG
PROCÉDÉ ET APPAREIL DE MISE À JOUR OTA

(43) Date of publication of application: 11.10.2023
(73) Proprietor: Yinwang Intelligent Technologies Co., Ltd., Shenzhen, Guangdong 518110 (CN)
(72) Inventor: WANG, Yong, Shenzhen, Guangdong 518129 (CN)
(74) Representative: Maiwald GmbH
(86) International application number: PCT/CN2020/140094
(87) International publication number: WO 2022/140903

(56) References cited:
- WO-A1-2020/101936
- WO-A2-2019/083440
- CN-A- 109 862 099
- CN-A- 110 597 538
- CN-A- 110 597 538
- CN-A- 111 079 163
- CN-A- 111 510 485
- US-A1- 2011 235 806
- US-A1- 2020 264 864
- HALDER SUBIR ET AL: "Secure over-the-air software updates in connected vehicles: A survey", COMPUTER NETWORKS, vol. 178, 1 September 2020 (2020-09-01), AMSTERDAM, NL, pages 107343, XP055916033, ISSN: 1389-1286, DOI: 10.1016/j.comnet.2020.107343

## Description

### TECHNICAL FIELD

This application relates to the fields of internet of vehicles and communication technologies, and in particular, to an OTA upgrade method and apparatus.

### BACKGROUND

With continuous development of computer technologies, network technologies, and the like, a quantity of terminals is increasing, people have increasingly high requirements on intelligence, security, and the like of terminals, and terminals are increasingly intelligent and multimedia-based. Various hardware and software (applications) are usually deployed in a current terminal. For example, an intelligent cockpit, a sensing system, and an automatic driving system are configured in a vehicle, and an on-board operating system, a navigation application, and an audio and video playback application are also installed in the vehicle. Although the hardware and the software enrich functions of the terminal, vulnerabilities are more likely to occur, or the hardware and the software need to be replaced with more advanced versions, or the like. Therefore, the hardware and the software (applications) of the terminal need to be upgraded and updated.

An over-the-air (Over the Air, OTA) download technology is a technology for downloading data through a wireless network, and has been widely applied to upgrades of devices such as a vehicle, a television, a mobile phone, a tablet computer, and a set-top box. In the OTA technology, an OTA upgrade package is mainly downloaded for an automatic upgrade (or the OTA upgrade package can be copied to an SD card for an upgrade). The OTA upgrade is fast and has little impact on data. Therefore, the OTA upgrade has become a main method for upgrading terminal functions. For example, for a vehicle, a vehicle manufacturer (Original Equipment Manufacturer, OEM, or referred to as an original equipment manufacturer) upgrades related hardware or software of the vehicle by using the OTA technology. This helps the manufacturer reduce recall costs, quickly respond to a requirement, and improve user experience.

In a conventional OTA upgrade mode, an OEM takes charge, and the OEM is responsible for reviewing a software version of an upgrade package and distributing the upgrade package. However, with development of intelligent connected vehicles, when some sensitive components, special applications, or the like need to be upgraded, if an upgrade package is submitted to an OEM for reviewing and then downloaded from an OTA server, a core technology of a component supplier may be leaked, or related data may be exposed. The US 20200264864 A1 refers to a vehicle-mounted device upgrade method and a related device. The CN 110 597 538 A refers to a software upgrading method based on OTA upgrading system and OTA upgrading system.

Therefore, how to protect confidentiality of upgrade data during an OTA upgrade becomes a technical issue that urgently needs to be addressed by a person skilled in the art.

### SUMMARY

Embodiments of this application disclose an OTA upgrade method and apparatus, to protect core assets such as confidential data and critical code in upgrade data, and improve security of an OTA upgrade. The invention is set out in the appended set of claims.

According to a first aspect, an embodiment of this application discloses an OTA upgrade method, including:

A first server encrypts upgrade data of a target component based on a first key to obtain first ciphertext, where the first server is a server for providing the upgrade data of the target component;
the first server sends the first ciphertext to an OTA server; and
the first server sends a second key to a first terminal in which the target component is deployed, where the second key is a decryption key corresponding to the first key.

The first server is a server for providing the upgrade data of the target component, and may be an independent server or a server cluster including a plurality of servers. The target component is a to-be-upgraded component. The first key and the second key may be a same key (for example, the first key and the second key are symmetric keys), or may be different keys (for example, the first key is a public key, and the second key is a private key).

It can be learned that, when providing the upgrade data of the target component, the first server may encrypt the upgrade data to obtain the first ciphertext, and the first terminal may obtain the first ciphertext from the OTA server. Subsequently, the first server may send the second key to the first terminal, so that the first terminal decrypts the first ciphertext and then performs upgrade. Because the upgrade data of the target component is encrypted during transmission, only the first server and the first terminal can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

With reference to the first aspect, in a possible implementation of the first aspect, the first server is a server used by a supplier of the target component to maintain the target component.

With reference to the first aspect, in another possible implementation of the first aspect, that the first server sends a second key to a first terminal in which the target component is deployed includes:

The first server establishes a secure channel to the first terminal in which the target component is deployed; and
the first server sends the second key to the first terminal through the secure channel.

The secure channel may be a transmission channel based on the secure sockets layer (Secure Sockets Layer, SSL) protocol or the transport layer security (Transport Layer Security, TLS) protocol, and is used to securely transmit data. The secure channel is a secure and trusted channel, and the first server and the first terminal transmit the second key through the secure channel, so that security of the second key can be ensured.

Optionally, the first server may specifically establish a secure channel to the target component in the first terminal, and send the second key to the target component in the first terminal. Alternatively, the first server may specifically establish a secure channel to an upgrade control component in the first terminal, and send the second key to the upgrade control component in the first terminal.

With reference to the first aspect, in another possible implementation of the first aspect, that the first server sends a second key to a first terminal in which the target component is deployed includes:

The first server encrypts the second key based on a first security parameter to obtain second ciphertext, where the first security parameter is a shared key between the first server and the first terminal or a first public key of the first terminal; and
the first server sends the second ciphertext to the first terminal in which the target component is deployed.

The first security parameter may be a public key, a symmetric key, or a shared key obtained through agreement between the first server and the first terminal (specifically, the target component, the upgrade control component, or the like in the first terminal). For example, the first terminal (specifically, the target component, the upgrade control component, or the like in the first terminal) may determine a private key pair. The public-private key pair includes a first public key and a first private key. The first public key may be sent to the first server as the first security parameter, and the first private key is used by the first terminal as a second security parameter to decrypt the second ciphertext to obtain the second key.

Optionally, the first server may specifically send the second ciphertext to the target component in the first terminal. Alternatively, the first server may specifically send the second ciphertext to the upgrade control component in the first terminal.

It can be learned that the second key is transmitted after being encrypted by using the security parameter, so that confidentiality of the second ciphertext can be improved, and therefore confidentiality of the upgrade data is improved.

With reference to the first aspect, in another possible implementation of the first aspect, before the first server encrypts the second key based on the first security parameter to obtain the second ciphertext, the method further includes:

The first server receives a key obtaining request from the first terminal.

With reference to the first aspect, in another possible implementation of the first aspect, the first security parameter is a temporary key or a one-time key.

The one-time key may be understood as a key that is used only once or that becomes invalid or is deleted after being used once. For example, the first server deletes the first security parameter after encrypting the second key by using the first security parameter, and the first terminal may delete the second security parameter after decrypting the second ciphertext by using the second security parameter. In this way, the first security parameter is used only once for encryption, and the second security parameter is used only once for decryption, so that the first security parameter and the second security parameter are not likely to be cracked, and data security is improved.

With reference to the first aspect, in another possible implementation of the first aspect, the first security parameter is the first public key of the first terminal, and before the first server encrypts the second key based on the first security parameter to obtain the second ciphertext, the method further includes:

The first server receives the first public key of the first terminal that is sent by the first terminal; and
the first server authenticates the first public key of the first terminal by using a first digital certificate of the first terminal.

With reference to the first aspect, in another possible implementation of the first aspect, the first digital certificate corresponds to a second public key and a second private key, and that the first server authenticates the first public key of the first terminal by using a first digital certificate of the first terminal includes:

The first server receives a first signature sent by the first terminal, where the first signature is obtained by signing the first public key by using the second private key; and
the first server determines, based on the second public key, the first signature, and the first public key, that the authentication on the first public key succeeds.

With reference to the first aspect, in another possible implementation of the first aspect, the first security parameter is the shared key between the first server and the first terminal, and before the first server encrypts the second key based on the first security parameter to obtain the second ciphertext, the method further includes:

The first server agrees with the first terminal by using a key-agreement algorithm to obtain the shared key; and
the first server authenticates an identity of the first terminal by using a pre-shared key PSK between the first server and the first terminal, where the PSK is a preset secret value between the first server and the target component.

It can be learned that the first security parameter (and the second security parameter subsequently used to decrypt the second ciphertext) may be determined by the first server and the first terminal by using the key-agreement algorithm. In this way, different terminals and the first server may obtain different security parameters through agreement, so that the first security parameter and the second security parameter are not likely to be cracked, and data security is improved.

With reference to the first aspect, in another possible implementation of the first aspect, that the first server authenticates an identity of the first terminal by using a pre-shared key PSK between the first server and the first terminal includes:

The first terminal receives a first message sent by the first terminal, where the first information includes a first nonce;
the first server sends a second message to the first terminal, where the second information includes a first authentication parameter and a second nonce, and the first authentication parameter is obtained based on the first message, the second nonce, and the PSK;
the first server receives a third message sent by the first terminal, where the third information includes a second authentication parameter; and
the first server determines, based on the second message, the first nonce, and the PSK, that authentication on an identity of the target component succeeds.

With reference to the first aspect, in another possible implementation of the first aspect, that the first server sends a second key to a first terminal in which the target component is deployed includes:

The first server sends the second key to an upgrade control component in the first terminal; or
the first server sends the second key to the target component in the first terminal.

According to a second aspect, an embodiment of this application discloses an OTA upgrade method, including:

A first terminal receives first ciphertext sent by an OTA server, where the first ciphertext is obtained by the first server by encrypting upgrade data of a target component in the first terminal based on a first key, and the first server is a server for providing the upgrade data of the target component;
the first terminal receives a second key from the first server, where the second key is a decryption key corresponding to the first key;
the first terminal decrypts the first ciphertext by using the second key to obtain the upgrade data of the target component; and
the first terminal upgrades the target component based on the upgrade data of the target component.

With reference to the second aspect, in a possible implementation of the second aspect, that the first terminal receives a second key from the first server includes:

The first terminal establishes a secure channel to the first server; and
the first terminal receives the second key of the first server through the secure channel.

With reference to the second aspect, in another possible implementation of the second aspect, that the first terminal receives a second key sent by the first server includes:

The first terminal receives second ciphertext from the first server, where the second ciphertext is obtained by encrypting the second key based on a first security parameter; and
the first terminal decrypts the second ciphertext based on a second security parameter to obtain the second key, where the second security parameter is a shared key between the first server and the first terminal or a first private key of the first terminal.

With reference to the second aspect, in another possible implementation of the second aspect, before the first terminal receives the second key from the first server, the method further includes:

The first terminal sends a key obtaining request to the first server.

With reference to the second aspect, in another possible implementation of the second aspect, the second security parameter is a temporary key or a one-time key.

With reference to the second aspect, in another possible implementation of the second aspect, the second security parameter is the first private key corresponding to a first public key, and the first security parameter is the first public key of the target component; and
the first public key is authenticated by using a first digital certificate of the target component.

With reference to the second aspect, in another possible implementation of the second aspect, the first digital certificate corresponds to a second public key and a second private key, and before the first terminal receives the second ciphertext from the first server, the method further includes:

The first terminal determines the first public key and the first private key;
the first terminal signs the first public key by using the second private key to obtain a first signature; and
the first terminal sends the first signature and the first public key to the first server, where the first signature is used by the first server to authenticate the first public key based on the second public key corresponding to the first signature certificate.

With reference to the second aspect, in another possible implementation of the second aspect, the first security parameter is the shared key between the first server and the first terminal, and before the first terminal decrypts the second ciphertext based on the second security parameter to obtain the second key, the method further includes:

The first terminal agrees with the first server by using a key-agreement algorithm to obtain the shared key; and
the first terminal authenticates an identity of the first server by using a pre-shared key PSK between the first server and the first terminal, where the PSK is a preset secret value between the first server and the first terminal.

With reference to the second aspect, in another possible implementation of the second aspect, that the first terminal authenticates an identity of the first server by using a pre-shared key PSK between the first server and the first terminal includes:

The first terminal sends a first message to the first server, where the first message includes a first nonce;
the first terminal receives a second message sent by the first server, where the second message includes a first authentication parameter and a second nonce;
the first terminal determines, based on the first authentication parameter, the first message, the second nonce, and the PSK, that the authentication on the identity of the first server succeeds; and
the first terminal sends a third message to the first server, where the third message includes a second authentication parameter, the second authentication parameter is obtained based on the first nonce, the second message, and the PSK, and the second authentication parameter is used to authenticate an identity of the first terminal.

With reference to the second aspect, in another possible implementation of the second aspect, the OTA upgrade method is specifically applied to the target component in the first terminal; or
the first terminal further includes an upgrade control component, and the OTA upgrade method is specifically applied to the upgrade control component.

It should be noted that the technical solution in the second aspect of this application may correspond to the solution in the first aspect. For related beneficial effect, refer to the beneficial effect in the first aspect. Details are not described herein again.

According to a third aspect, an embodiment of this application discloses an OTA upgrade method, including:

An OTA server receives first ciphertext from a first server, where the first ciphertext is obtained by the first server by encrypting upgrade data of a target component in a first terminal based on a first key, and the first server is a server for providing the upgrade data of the target component; and
the OTA server sends an upgrade policy to the first terminal, where the upgrade policy includes a first download address of the first ciphertext.

With reference to the third aspect, in a possible implementation of the third aspect, the method further includes:

The OTA server sends the first ciphertext to the first terminal through a secure channel, where the secure channel is jointly established by the first terminal and the OTA server based on the first download address.

With reference to the third aspect, in another possible implementation of the third aspect, the upgrade policy includes one or more of an upgrade rule, an upgrade condition, a download rule, and the like.

The upgrade rule is used to define a rule like an upgrade sequence and whether rollback needs to be performed. The upgrade condition may include whether power supply is normal, storage space, a network status, a status of another device that has a dependency relationship, and the like. The download rule is used to define a download sequence, indicate a component to be downloaded, and the like.

With reference to the third aspect, in another possible implementation of the third aspect, the method further includes:

The OTA server determines the upgrade policy based on information about the first terminal and/or information about the first ciphertext.

For example, the OTA server determines, based on the information about the first terminal and a file size of the first ciphertext, a size of storage space used by the first terminal.

According to a fourth aspect, an embodiment of this application discloses an OTA upgrade method, including:

A first server sends metadata of upgrade data of a target component to an OTA server, where the first server is a server for providing the upgrade data of the target component, and the metadata of the upgrade data includes a first download address of the upgrade data and version information of the upgrade data; and
the first server sends, through a secure channel, the upgrade data of the target component to a first terminal in which the target component is deployed, where the secure channel is jointly established by the first terminal and the first server based on the first download address.

It can be learned that the first server sends the metadata of the upgrade data to the OTA server, the OTA server sends the first download address of the upgrade data to the first terminal, and the first terminal downloads the upgrade data from the first server based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from the first server, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

With reference to the fourth aspect, in a possible implementation of the fourth aspect, the first server is a server used by a supplier of the target component to maintain the target component.

With reference to the fourth aspect, in another possible implementation of the fourth aspect, that the first server sends, through a secure channel, the upgrade data of the target component to a first terminal in which the target component is deployed may be specifically as follows:

The first server sends the upgrade data of the target component to the target component in the first terminal through the secure channel; or
the first server sends the upgrade data of the target component to an upgrade control component in the first terminal through the secure channel.

According to a fifth aspect, an embodiment of this application discloses an OTA upgrade method, including:

A first terminal receives a download policy sent by an OTA server, where the download policy includes a first download address of upgrade data of a target component, and the target component is deployed in the first terminal;
the first terminal and a first server jointly establish a secure channel based on the first download address, where the first server is a server for providing the upgrade data of the target component;
the first terminal receives, through the secure channel, the upgrade data of the target component that is sent by the first server; and
the first terminal upgrades the target component based on the upgrade data of the target component.

With reference to the fifth aspect, in a possible implementation of the fifth aspect, the OTA upgrade method is specifically applied to the target component.

With reference to the fifth aspect, in another possible implementation of the fifth aspect, the first terminal further includes an upgrade control component, and the OTA upgrade method is specifically applied to the upgrade control component.

The technical solution in the fifth aspect may correspond to the technical solution in the fourth aspect. For related beneficial effect, refer to the beneficial effect in the fourth aspect. Details are not described herein again.

According to a sixth aspect, an embodiment of this application discloses an OTA upgrade method, including:
An OTA server receives metadata, sent by a first server, of upgrade data of a target component, where the first server is a server for providing the upgrade data of the target component, and the metadata of the upgrade data includes a first download address of the upgrade data and version information of the upgrade data; and
the OTA server sends an upgrade policy to a first terminal, where the upgrade policy includes the first download address.

With reference to the sixth aspect, in a possible implementation of the sixth aspect, the method further includes:
The OTA server determines the upgrade policy based on information about the first terminal and/or the metadata of the upgrade data.

With reference to the sixth aspect, in another possible implementation of the sixth aspect, the upgrade policy includes one or more of an upgrade rule, an upgrade condition, a download rule, and the like.

With reference to the sixth aspect, in another possible implementation of the sixth aspect, the metadata further includes a file size of the upgrade data of the target component.

According to a seventh aspect, an embodiment of this application discloses an OTA upgrade method, including:

A first server encrypts upgrade data of a target component based on a first key to obtain first ciphertext, where the first server is a server for providing the upgrade data of the target component;
the first server encrypts a second key based on a first security parameter to obtain second ciphertext, where the first security parameter is a shared key between the first server and a first terminal or a first public key of the first terminal, the first terminal is a terminal in which a first target component is deployed, the first target component is one of the target component, and the second key is a decryption key of the first key; and
the first server sends the first ciphertext and the second ciphertext to an OTA server, where the second ciphertext is used by the first terminal to decrypt the first ciphertext.

It can be learned that, if the second security parameter is not obtained, the second ciphertext cannot be decrypted to obtain the second key, and further, the first ciphertext cannot be decrypted to obtain the upgrade data of the target component. Therefore, security of the upgrade data of the target component is ensured.

Further, the upgrade data of the target component is not directly encrypted; instead, the second key is encrypted by using the first security parameter. A data size of a key is usually less than a data size of upgrade data. Therefore, for a supplier that has a plurality of components or a plurality of types of components to be upgraded, considering that security parameters of the plurality of components may be different, compared with a case in which upgrade data is directly encrypted by using a security parameter, a computation amount and a storage amount during encryption can be significantly reduced in this embodiment, so that upgrade efficiency is improved.

With reference to the seventh aspect, in a possible implementation of the seventh aspect, the first server is a server used by a supplier of the target component to maintain the target component.

According to an eighth aspect, an embodiment of this application discloses an OTA upgrade method, including:

An OTA server receives first ciphertext and second ciphertext that are sent by a first server, where the first ciphertext is obtained by encrypting upgrade data of a target component based on a first key, the second ciphertext is obtained by encrypting a second key based on a first security parameter, the first security parameter is a shared key between the first server and a first terminal or a first public key of the first terminal, the first terminal is a terminal in which a first target component is deployed, the first target component is one of the target component, and the second key is a decryption key of the first key; and
the OTA server sends the first ciphertext and the second ciphertext to the first terminal, where the second ciphertext is used by the first terminal to decrypt the first ciphertext to obtain the upgrade data of the target component.

With reference to the eighth aspect, in a possible implementation of the eighth aspect, that the OTA server sends the first ciphertext and the second ciphertext to the first terminal includes:

The OTA server generates an upgrade policy based on information about the first terminal and a property of an upgrade package including the first ciphertext, where the upgrade policy includes a first download address of the first ciphertext and the second ciphertext;
the OTA server sends the upgrade policy to the first terminal; and
the OTA server sends the first ciphertext and the second ciphertext to the first terminal through a secure channel, where the secure channel is jointly established by the first terminal and the OTA server based on the first download address.

The technical solution in the eighth aspect may correspond to the technical solution in the seventh aspect. For related beneficial effect, refer to the beneficial effect in the seventh aspect. Details are not described herein again.

According to a ninth aspect, an embodiment of this application discloses an OTA upgrade method, applied to a first terminal in which a first target component is deployed. The first target component is one of a target component. The method includes:

The first terminal receives first ciphertext and second ciphertext that are sent by an OTA server, where the first ciphertext is obtained by a first server by encrypting upgrade data of the target component based on a first key, and the first server is a server for providing the upgrade data of the target component;
the first terminal decrypts the second ciphertext based on a second security parameter to obtain a second key, where the second key is a decryption key of the first key, and the second security parameter is a shared key between the first server and the first terminal or a first private key of the first terminal;
the first terminal decrypts the first ciphertext based on the second key to obtain the upgrade data of the target component; and
the first terminal upgrades the first target component based on the upgrade data of the target component.

With reference to the ninth aspect, in a possible implementation of the ninth aspect, the OTA upgrade method is specifically applied to the first target component in the first terminal; or
the first terminal in an OTA upgrade system further includes an upgrade control component, and the OTA upgrade method is specifically applied to the upgrade control component.

Further, the upgrade control component is configured to control an upgrade of the first target component.

With reference to the ninth aspect, in another possible implementation of the ninth aspect, that the first terminal receives first ciphertext and second ciphertext that are sent by an OTA server includes:
the first terminal establishes a secure channel to the OTA server based on a first download address; and
the first terminal receives, through the secure channel, the first ciphertext and the second ciphertext that are sent by the OTA server.

With reference to the ninth aspect, in another possible implementation of the ninth aspect, the method further includes:

The first terminal receives a download policy from the OTA server, where the download policy includes the first download address.

According to a tenth aspect, an embodiment of this application discloses an OTA upgrade method, including:
A first server encrypts upgrade data of a target component based on a first security parameter to obtain first ciphertext, where the first security parameter is a preset shared key between the first server and a first terminal or a preset first public key of the first terminal, the first server is a server for providing the upgrade data of the target component, and the first terminal is a terminal in which the target component is deployed; and
the first server sends the first ciphertext to an OTA server, where the first ciphertext is sent by the OTA server to the first terminal to upgrade the target component in the first terminal.

It can be learned that the first security parameter and the second security parameter may be preconfigured or pre-obtained, the first server encrypts the upgrade data of the target component by using the first security parameter, and the first terminal decrypts the first ciphertext by using the second security parameter to obtain the upgrade data of the target component. The upgrade data of the target component is encrypted during transmission. If the second security parameter is not obtained, the second ciphertext cannot be decrypted to obtain the second key, and further, the first ciphertext cannot be decrypted to obtain the upgrade data of the target component. Therefore, confidentiality of the upgrade data is ensured. When the upgrade data includes core code and a key technology implementation, core assets such as confidential data and critical code can be effectively protected.

With reference to the tenth aspect, in a possible implementation of the tenth aspect, the first server is a server used by a supplier of the target component to maintain the target component.

According to an eleventh aspect, an embodiment of this application discloses an OTA upgrade method, applied to a first terminal in which a first target component is deployed. The first target component is one of a target component. The method includes:
A first terminal receives first ciphertext sent by an OTA server, where the first ciphertext is obtained by a first server by encrypting upgrade data of the target component based on a first security parameter, the first server is a server for providing the upgrade data of the target component, and the first security parameter is a shared key between the first server and the first terminal or a first public key of the first terminal;
the first terminal decrypts the first ciphertext in an upgrade package based on a second security parameter to obtain the upgrade data of the target component, where the second security parameter is the shared key or a first private key of the first terminal; and
the first terminal upgrades the target component based on the upgrade data of the target component.

With reference to the eleventh aspect, in a possible implementation of the eleventh aspect, the OTA upgrade method is specifically applied to the target component.

With reference to the eleventh aspect, in a possible implementation of the eleventh aspect, an upgrade control component is further deployed in the first terminal, and the OTA upgrade method is specifically applied to the upgrade control component.

The technical solution in the eleventh aspect may correspond to the technical solution in the tenth aspect. For related beneficial effect, refer to the beneficial effect in the tenth aspect. Details are not described herein again.

According to a twelfth aspect, an embodiment of this application discloses an OTA upgrade method, including:
An OTA server receives first ciphertext from a first server, where the first ciphertext is obtained by the first server by encrypting upgrade data of a target component in a first terminal based on a first security parameter, and the first server is a server for providing the upgrade data of the target component; and
the OTA server sends an upgrade policy to the first terminal, where the upgrade policy includes a first download address of the first ciphertext.

With reference to the twelfth aspect, in a possible implementation of the twelfth aspect, the method further includes:
The OTA server sends the first ciphertext to the first terminal through a secure channel, where the secure channel is jointly established by the first terminal and the OTA server based on the first download address.

With reference to the twelfth aspect, in another possible implementation of the twelfth aspect, the upgrade policy includes one or more of an upgrade rule, an upgrade condition, a download rule, and the like.

With reference to the twelfth aspect, in another possible implementation of the twelfth aspect, the method further includes:

The OTA server determines the upgrade policy based on information about the first terminal and/or information about the first ciphertext.

According to a thirteenth aspect, an embodiment of this application discloses an OTA upgrade apparatus. The OTA upgrade apparatus may include a processing unit and a sending unit. The OTA upgrade apparatus is configured to implement the method described in any one of the first aspect or the possible implementations of the first aspect.

In a possible implementation solution, the processing unit is configured to encrypt upgrade data of a target component based on a first key to obtain first ciphertext, where a first server is a server for providing the upgrade data of the target component;
the sending unit is configured to send the first ciphertext to an OTA server; and
the sending unit is further configured to send a second key to a first terminal in which the target component is deployed, where the second key is a decryption key corresponding to the first key.

With reference to the thirteenth aspect, in a possible implementation of the thirteenth aspect, the OTA upgrade apparatus is an apparatus used by a supplier of the target component to maintain the target component.

With reference to the thirteenth aspect, in another possible implementation of the thirteenth aspect, the processing unit is further configured to establish a secure channel to the first terminal in which the target component is deployed; and
the sending unit is further configured to send the second key to the first terminal through the secure channel.

With reference to the thirteenth aspect, in another possible implementation of the thirteenth aspect, the processing unit is further configured to encrypt the second key based on a first security parameter to obtain second ciphertext, where the first security parameter is a shared key between the first server and the first terminal or a first public key of the first terminal; and
the sending unit is further configured to send the second ciphertext to the first terminal in which the target component is deployed.

With reference to the thirteenth aspect, in another possible implementation of the thirteenth aspect, the apparatus further includes:
a receiving unit, configured to receive a key obtaining request from the first terminal.

With reference to the thirteenth aspect, in another possible implementation of the thirteenth aspect, the first security parameter is a temporary key or a one-time key.

With reference to the thirteenth aspect, in another possible implementation of the thirteenth aspect, the first security parameter is the first public key of the first terminal, and the receiving unit is further configured to receive the first public key of the first terminal that is sent by the first terminal; and
the processing unit is further configured to authenticate the first public key of the first terminal by using a first digital certificate of the first terminal.

With reference to the thirteenth aspect, in another possible implementation of the thirteenth aspect, the first digital certificate corresponds to a second public key and a second private key, and the receiving unit is further configured to receive a first signature sent by the first terminal, where the first signature is obtained by signing the first public key by using the second private key; and
the processing unit is further configured to determine, based on the second public key, the first signature, and the first public key, that the authentication on the first public key succeeds.

With reference to the thirteenth aspect, in another possible implementation of the thirteenth aspect, the first security parameter is the shared key between the first server and the first terminal, and the processing unit is further configured to:
agree with the first terminal by using a key-agreement algorithm to obtain the shared key; and
authenticate an identity of the first terminal by using a pre-shared key PSK between the first server and the first terminal, where the PSK is a preset secret value between the first server and the target component.

With reference to the thirteenth aspect, in another possible implementation of the thirteenth aspect, the receiving unit is further configured to receive a first message sent by the first terminal, where the first information includes a first nonce;
the sending unit is further configured to send a second message to the first terminal, where the second information includes a first authentication parameter and a second nonce, and the first authentication parameter is obtained based on the first message, the second nonce, and the PSK;
the receiving unit is further configured to receive a third message sent by the first terminal, where the third information includes a second authentication parameter; and
the processing unit is specifically configured to determine, based on the second message, the first nonce, and the PSK, that authentication on an identity of the target component succeeds.

With reference to the thirteenth aspect, in another possible implementation of the thirteenth aspect, the sending unit is specifically configured to:
send the second key to an upgrade control component in the first terminal; or
send the second key to the target component in the first terminal.

According to a fourteenth aspect, an embodiment of this application discloses an OTA upgrade apparatus, including a receiving unit and a processing unit. The OTA upgrade apparatus is configured to implement the method described in any one of the second aspect or the possible implementations of the second aspect.

In a possible implementation, the receiving unit is configured to receive first ciphertext sent by an OTA server, where the first ciphertext is obtained by a first server by encrypting upgrade data of a target component in a first terminal based on a first key, and the first server is a server for providing the upgrade data of the target component;
the receiving unit is further configured to receive a second key from the first server, where the second key is a decryption key corresponding to the first key;
the processing unit is further configured to decrypt the first ciphertext by using the second key to obtain the upgrade data of the target component; and
the processing unit is further configured to upgrade the target component based on the upgrade data of the target component.

With reference to the fourteenth aspect, in another possible implementation of the fourteenth aspect, the processing unit is further configured to establish a secure channel to the first server; and
the receiving unit is specifically configured to receive the second key of the first server through the secure channel.

With reference to the fourteenth aspect, in another possible implementation of the fourteenth aspect,
the receiving unit is specifically configured to receive second ciphertext from the first server, where the second ciphertext is obtained by encrypting the second key based on a first security parameter; and
the processing unit is further configured to decrypt the second ciphertext based on a second security parameter to obtain the second key, where the second security parameter is a shared key between the first server and the first terminal or a first private key of the first terminal.

With reference to the fourteenth aspect, in another possible implementation of the fourteenth aspect, the apparatus further includes:
a sending unit, configured to send a key obtaining request to the first server.

With reference to the fourteenth aspect, in another possible implementation of the fourteenth aspect, the second security parameter is a temporary key or a one-time key.

With reference to the fourteenth aspect, in another possible implementation of the fourteenth aspect,
the second security parameter is the first private key corresponding to a first public key, and the first security parameter is the first public key of the first terminal; and
the first public key is authenticated by using a first digital certificate of the first terminal.

With reference to the fourteenth aspect, in another possible implementation of the fourteenth aspect, the first digital certificate corresponds to a second public key and a second private key;
the processing unit is further configured to determine the first public key and the first private key;
the processing unit is further configured to sign the first public key by using the second private key to obtain a first signature; and
the sending unit is further configured to send the first signature and the first public key to the first server, where the first signature is used by the first server to authenticate the first public key based on the second public key corresponding to the first signature certificate.

With reference to the fourteenth aspect, in another possible implementation of the fourteenth aspect, the first security parameter is the shared key between the first server and the first terminal, and the processing unit is further configured to:
agree with the first server by using a key-agreement algorithm to obtain the shared key; and
authenticate an identity of the first server by using a pre-shared key PSK between the first server and the first terminal, where the PSK is a preset secret value between the first server and the target component.

With reference to the fourteenth aspect, in another possible implementation of the fourteenth aspect, the sending unit is further configured to send a first message to the first server, where the first message includes a first nonce;
the receiving unit is further configured to receive a second message sent by the first server, where the second message includes a first authentication parameter and a second nonce;
the processing unit is specifically configured to determine, based on the first authentication parameter, the first message, the second nonce, and the PSK, that the authentication on the identity of the first server succeeds; and
the sending unit is further configured to send a third message to the first server, where the third message includes a second authentication parameter, the second authentication parameter is obtained based on the first nonce, the second message, and the PSK, and the second authentication parameter is used to authenticate an identity of the first terminal.

With reference to the fourteenth aspect, in another possible implementation of the fourteenth aspect, the OTA upgrade apparatus is specifically the target component in the first terminal; or
the OTA upgrade apparatus is specifically an upgrade control component in the first terminal.

According to a fifteenth aspect, an embodiment of this application discloses an OTA upgrade apparatus, including a receiving unit and a sending unit. The OTA upgrade apparatus is configured to implement the method described in any one of the third aspect or the possible implementations of the third aspect.

In a possible implementation, the receiving unit is configured to receive first ciphertext from a first server, where the first ciphertext is obtained by the first server by encrypting upgrade data of a target component in a first terminal based on a first key, and the first server is a server for providing the upgrade data of the target component; and
the sending unit is configured to send an upgrade policy to the first terminal, where the upgrade policy includes a first download address of the first ciphertext.

With reference to the fifteenth aspect, in a possible implementation of the fifteenth aspect, the sending unit is specifically configured to send the first ciphertext to the first terminal through a secure channel, where the secure channel is jointly established by the first terminal and an OTA server based on the first download address.

With reference to the fifteenth aspect, in another possible implementation of the fifteenth aspect, the upgrade policy includes one or more of an upgrade rule, an upgrade condition, a download rule, and the like.

The upgrade rule is used to define a rule like an upgrade sequence and whether rollback needs to be performed. The upgrade condition may include whether power supply is normal, storage space, a network status, a status of another device that has a dependency relationship, and the like. The download rule is used to define a download sequence, indicate a component to be downloaded, and the like.

With reference to the fifteenth aspect, in another possible implementation of the fifteenth aspect, the apparatus further includes:
a processing unit 1503, configured to determine the upgrade policy based on information about the first terminal and/or information about the first ciphertext.

For example, the OTA server determines, based on the information about the first terminal and a file size of the first ciphertext, a size of storage space used by the first terminal.

According to a sixteenth aspect, an embodiment of this application discloses an OTA upgrade apparatus, including a sending unit. The OTA upgrade apparatus is configured to implement the method described in any one of the fourth aspect or the possible implementations of the fourth aspect. The OTA upgrade apparatus is an apparatus for providing upgrade data of a target component.

In a possible implementation, the sending unit is configured to send metadata of the upgrade data of the target component to an OTA server, where the metadata of the upgrade data includes a first download address of the upgrade data and version information of the upgrade data; and
the sending unit is further configured to send, through a secure channel, the upgrade data of the target component to a first terminal in which the target component is deployed, where the secure channel is jointly established by the first terminal and a first server based on the first download address.

With reference to the sixteenth aspect, in a possible implementation of the sixteenth aspect, the OTA upgrade apparatus is an apparatus used by a supplier of the target component to maintain the target component.

With reference to the sixteenth aspect, in another possible implementation of the sixteenth aspect, the OTA upgrade apparatus further includes:
a processing unit, configured to determine the metadata of the upgrade data of the target component.

With reference to the sixteenth aspect, in another possible implementation of the sixteenth aspect, the sending unit is specifically configured to:
send the upgrade data of the target component to the target component in the first terminal through the secure channel; or
send the upgrade data of the target component to an upgrade control component in the first terminal through the secure channel.

According to a seventeenth aspect, an embodiment of this application discloses an OTA upgrade apparatus. The OTA upgrade apparatus includes a receiving unit and a processing unit. The OTA upgrade apparatus is configured to implement the method described in any one of the fifth aspect or the possible implementations of the fifth aspect. A target component is deployed in the OTA upgrade apparatus.

In a possible implementation, the receiving unit is configured to receive a download policy sent by an OTA server, where the download policy includes a first download address of upgrade data of the target component, and the target component is deployed in a first terminal;
the processing unit is configured to jointly establish, with a first server, a secure channel based on the first download address, where the first server is a server for providing the upgrade data of the target component;
the processing unit is further configured to receive, through the secure channel, the upgrade data of the target component that is sent by the first server; and
the processing unit is further configured to upgrade the target component based on the upgrade data of the target component.

With reference to the seventeenth aspect, in another possible implementation of the seventeenth aspect, the OTA upgrade apparatus is specifically the target component in the first terminal; or
the OTA upgrade apparatus is specifically an upgrade control component in the first terminal.

According to an eighteenth aspect, an embodiment of this application discloses an OTA upgrade apparatus, including a receiving unit and a sending unit. The OTA upgrade apparatus is configured to implement the method described in any one of the sixth aspect or the possible implementations of the sixth aspect.

In a possible implementation, the receiving unit is configured to receive metadata, sent by a first server, of upgrade data of a target component, where the first server is a server for providing the upgrade data of the target component, and the metadata of the upgrade data includes a first download address of the upgrade data and version information of the upgrade data; and
the sending unit is configured to send an upgrade policy to a first terminal, where the upgrade policy includes the first download address of first ciphertext.

With reference to the eighteenth aspect, in another possible implementation of the eighteenth aspect, the apparatus further includes:
a processing unit, configured to determine the upgrade policy based on information about the first terminal and/or the metadata of the upgrade data.

With reference to the eighteenth aspect, in another possible implementation of the eighteenth aspect, the upgrade policy includes one or more of an upgrade rule, an upgrade condition, a download rule, and the like.

With reference to the eighteenth aspect, in another possible implementation of the eighteenth aspect, the metadata further includes a file size of the upgrade data of the target component.

According to a nineteenth aspect, an embodiment of this application discloses an OTA upgrade apparatus, including a processing unit and a sending unit. The OTA apparatus is configured to implement the method described in any one of the seventh aspect or the possible implementations of the seventh aspect. The OTA upgrade apparatus may be an apparatus for providing upgrade data of a target component.

In a possible implementation solution, the processing unit is configured to encrypt the upgrade data of the target component based on a first key to obtain first ciphertext, where a first server is a server for providing the upgrade data of the target component;
the processing unit is configured to encrypt a second key based on a first security parameter to obtain second ciphertext, where the first security parameter is a shared key between the first server and a first terminal or a first public key of the first terminal, the first terminal is a terminal in which a first target component is deployed, the first target component is one of the target component, and the second key is a decryption key of the first key; and
the sending unit is configured to send the first ciphertext and the second ciphertext to an OTA server, where the second ciphertext is used by the first terminal to decrypt the first ciphertext.

With reference to the nineteenth aspect, in a possible implementation of the nineteenth aspect, the OTA upgrade apparatus is an apparatus used by a supplier of the target component to maintain the target component.

According to a twentieth aspect, an embodiment of this application discloses an OTA upgrade apparatus, including a receiving unit and a sending unit. The OTA upgrade apparatus is configured to implement the method described in any one of the eighth aspect or the possible implementations of the eighth aspect.

In a possible implementation, the receiving unit is configured to receive first ciphertext and second ciphertext that are sent by a first server, where the first ciphertext is obtained by encrypting upgrade data of a target component based on a first key, the second ciphertext is obtained by encrypting a second key based on a first security parameter, the first security parameter is a shared key between the first server and a first terminal or a first public key of the first terminal, the first terminal is a terminal in which a first target component is deployed, the first target component is one of the target component, and the second key is a decryption key of the first key; and
the sending unit is configured to send the first ciphertext and the second ciphertext to the first terminal, where the second ciphertext is used by the first terminal to decrypt the first ciphertext to obtain the upgrade data of the target component.

With reference to the twentieth aspect, in a possible implementation of the twentieth aspect, the apparatus further includes:
a processing unit, configured to generate an upgrade policy based on information about the first terminal and a property of an upgrade package including the first ciphertext, where the upgrade policy includes a first download address of the first ciphertext and the second ciphertext, where
the sending unit is further configured to send the upgrade policy to the first terminal; and
the sending unit is further configured to send the first ciphertext and the second ciphertext to the first terminal through a secure channel, where the secure channel is jointly established by the first terminal and an OTA server based on the first download address.

According to a twenty-first aspect, an embodiment of this application discloses an OTA upgrade apparatus, including a receiving unit and a processing unit. The OTA upgrade apparatus is configured to implement the method described in any one of the ninth aspect or the possible implementations of the ninth aspect. A first target component is deployed in the OTA upgrade apparatus (or a device in which the OTA upgrade apparatus is located), and the first target component is one of a target component.

In a possible implementation, the receiving unit is configured to receive first ciphertext and second ciphertext that are sent by an OTA server, where the first ciphertext is obtained by a first server by encrypting upgrade data of the target component based on a first key, and the first server is a server for providing the upgrade data of the target component;
the processing unit is configured to decrypt the second ciphertext based on a second security parameter to obtain a second key, where the second key is a decryption key of the first key, and the second security parameter is a shared key between the first server and a first terminal or a first private key of the first terminal;
the processing unit is further configured to decrypt the first ciphertext based on the second key to obtain the upgrade data of the target component; and
the processing unit is further configured to upgrade the first target component based on the upgrade data of the target component.

With reference to the twenty-first aspect, in a possible implementation of the twenty-first aspect, the OTA upgrade apparatus is specifically the first target component in the first terminal; or
the OTA upgrade apparatus is specifically an upgrade control component in the first terminal.

With reference to the twenty-first aspect, in another possible implementation of the twenty-first aspect, the processing unit is further configured to establish a secure channel to the OTA server based on a first download address; and
the receiving unit is specifically configured to receive, through the secure channel, the first ciphertext and the second ciphertext that are sent by the OTA server.

With reference to the twenty-first aspect, in another possible implementation of the twenty-first aspect, the receiving unit is further configured to receive a download policy from the OTA server, where the download policy includes the first download address.

According to a twenty-second aspect, an embodiment of this application discloses an OTA upgrade apparatus, including a processing unit and a sending unit. The OTA upgrade apparatus is configured to implement the method described in any one of the tenth aspect or the possible implementations of the tenth aspect. The OTA upgrade apparatus may be an apparatus for providing upgrade data of a target component.

In a possible implementation solution, the processing unit is configured to encrypt the upgrade data of the target component based on a first security parameter to obtain first ciphertext, where the first security parameter is a preset shared key between a first server and a first terminal or a preset first public key of the first terminal, the first server is a server for providing the upgrade data of the target component, and the first terminal is a terminal in which the target component is deployed; and
the sending unit is configured to send the first ciphertext to an OTA server, where the first ciphertext is sent by the OTA server to the first terminal to upgrade the target component in the first terminal.

With reference to the twenty-second aspect, in a possible implementation of the twenty-second aspect, the OTA upgrade apparatus is an apparatus used by a supplier of the target component to maintain the target component.

According to a twenty-third aspect, an embodiment of this application discloses an OTA upgrade apparatus, including a receiving unit and a processing unit. The OTA upgrade apparatus is configured to implement the method described in any one of the eleventh aspect or the possible implementations of the eleventh aspect. A first target component is deployed in the OTA upgrade apparatus, and the first target component is one of a target component.

In a possible implementation, the receiving unit is configured to receive first ciphertext sent by an OTA server, where the first ciphertext is obtained by a first server by encrypting upgrade data of the target component based on a first security parameter, the first server is a server for providing the upgrade data of the target component, and the first security parameter is a shared key between the first server and a first terminal or a first public key of the first terminal;
the processing unit is configured to decrypt the first ciphertext in an upgrade package based on a second security parameter to obtain the upgrade data of the target component, where the second security parameter is the shared key or a first private key of the first terminal; and
the processing unit is further configured to upgrade the target component based on the upgrade data of the target component.

With reference to the twenty-third aspect, in another possible implementation of the twenty-third aspect, the OTA upgrade apparatus is specifically the target component in the first terminal; or
the OTA upgrade apparatus is specifically an upgrade control component in the first terminal.

According to a twenty-fourth aspect, an embodiment of this application discloses an OTA upgrade apparatus, including a receiving unit and a sending unit. The OTA upgrade apparatus is configured to implement the method described in any one of the twelfth aspect or the possible implementations of the twelfth aspect.

In a possible implementation, the receiving unit is configured to receive first ciphertext from a first server, where the first ciphertext is obtained by the first server by encrypting upgrade data of a target component in a first terminal based on a first security parameter, and the first server is a server for providing the upgrade data of the target component; and
the sending unit is configured to send an upgrade policy to the first terminal, where the upgrade policy includes a first download address of the first ciphertext.

With reference to the twenty-fourth aspect, in a possible implementation of the twenty-fourth aspect, the sending unit is specifically configured to send the first ciphertext to the first terminal through a secure channel, where the secure channel is jointly established by the first terminal and an OTA server based on the first download address.

With reference to the twenty-fourth aspect, in another possible implementation of the twenty-fourth aspect, the upgrade policy includes one or more of an upgrade rule, an upgrade condition, a download rule, and the like.

With reference to the twenty-fourth aspect, in another possible implementation of the twenty-fourth aspect, the apparatus further includes:
a processing unit, configured to determine the upgrade policy based on information about the first terminal and/or information about the first ciphertext.

According to a twenty-fifth aspect, an embodiment of this application further provides a first server. The server includes at least one processor and a communication interface. The communication interface is configured to send and/or receive data. The at least one processor is configured to invoke a computer program stored in at least one memory, so that the first server implements the method described in any one of the first aspect or the possible implementations of the first aspect, or implements the method described in any one of the fourth aspect or the possible implementations of the fourth aspect, or implements the method described in any one of the seventh aspect or the possible implementations of the seventh aspect, or implements the method described in any one of the eleventh aspect or the possible implementations of the eleventh aspect.

According to a twenty-sixth aspect, an embodiment of this application further provides a first terminal. The first terminal includes at least one processor and a communication interface. The communication interface is configured to send and/or receive data. The at least one processor is configured to invoke a computer program stored in at least one memory, so that the first terminal implements the method described in any one of the second aspect or the possible implementations of the second aspect, or implements the method described in any one of the fifth aspect or the possible implementations of the fifth aspect, or implements the method described in any one of the ninth aspect or the possible implementations of the ninth aspect, or implements the method described in any one of the eleventh aspect or the possible implementations of the eleventh aspect.

Optionally, the first terminal may be an apparatus like a gateway, a vehicle integrated/integration unit, or a T-box, or may be an intelligent device or a transportation terminal, like a vehicle, a robot, or an uncrewed aerial vehicle.

According to a twenty-seventh aspect, an embodiment of this application further provides an OTA server. The OTA server includes at least one processor and a communication interface. The communication interface is configured to send and/or receive data. The at least one processor is configured to invoke a computer program stored in at least one memory, so that the OTA server implements the method described in any one of the third aspect or the possible implementations of the third aspect, or implements the method described in any one of the sixth aspect or the possible implementations of the sixth aspect, or implements the method described in any one of the eighth aspect or the possible implementations of the eighth aspect, or implements the method described in any one of the twelfth aspect or the possible implementations of the twelfth aspect.

According to a twenty-eighth aspect, an embodiment of this application further provides an OTA upgrade system. The OTA upgrade system includes a first server and a target component. The first server is configured to implement the method described in the first aspect or the another possible implementation of the first aspect, and the target component is configured to implement the method described in the second aspect or the possible implementation of the second aspect; or
the first server is configured to implement the method described in the fourth aspect or the another possible implementation of the fourth aspect, and the target component is configured to implement the method described in the fifth aspect or the possible implementation of the fifth aspect; or
the first server is configured to implement the method described in the seventh aspect or the another possible implementation of the seventh aspect, and the target component is configured to implement the method described in the ninth aspect or the possible implementation of the ninth aspect; or
the first server is configured to implement the method described in the tenth aspect or the another possible implementation of the tenth aspect, and the target component is configured to implement the method described in the eleventh aspect or the possible implementation of the eleventh aspect.

According to a twenty-ninth aspect, an embodiment of this application further provides an OTA upgrade system. The OTA upgrade system includes an OTA server and a first terminal. The OTA server is configured to implement the method described in the third aspect or the another possible implementation of the third aspect, and the first terminal is configured to implement the method described in the second aspect or the possible implementation of the second aspect; or
the OTA server is configured to implement the method described in the sixth aspect or the another possible implementation of the sixth aspect, and the first terminal is configured to implement the method described in the fifth aspect or the possible implementation of the fifth aspect; or
the OTA server is configured to implement the method described in the eighth aspect or the another possible implementation of the eighth aspect, and the first terminal is configured to implement the method described in the ninth aspect or the possible implementation of the ninth aspect; or
the OTA server is configured to implement the method described in the twelfth aspect or the another possible implementation of the twelfth aspect, and the first terminal is configured to implement the method described in the eleventh aspect or the another possible implementation of the eleventh aspect.

According to a thirtieth aspect, an embodiment of this application discloses a computer-readable storage medium. The computer-readable storage medium stores a computer program. When the computer program runs on one or more processors, the method described in the first aspect to the twelfth aspect (or the possible implementations of the first aspect to the twelfth aspect) is implemented.

According to a thirty-first aspect, an embodiment of this application discloses a computer program product. When the computer program product runs on one or more processors, the method described in the first aspect to the twelfth aspect (or the possible implementations of the first aspect to the twelfth aspect) is implemented.

It can be understood that, for beneficial effect on an apparatus side in embodiments of this application, reference may be made to a corresponding method side. Details are not described herein again.

### BRIEF DESCRIPTION OF DRAWINGS

The following describes accompanying drawings used in embodiments of this application.
FIG. 1 is a schematic diagram of an architecture of an OTA upgrade system according to an embodiment of this application;
FIG. 2 is a schematic diagram of an architecture of a vehicle upgrade system according to an embodiment of this application;
FIG. 3 is a schematic flowchart of an OTA upgrade method according to an embodiment of this application;
FIG. 4 is a schematic diagram of an architecture of a vehicle according to an embodiment of this application;
FIG. 5 is a schematic flowchart of a method for determining a first security parameter according to an embodiment of this application;
FIG. 6 is a schematic flowchart of another method for determining a first security parameter according to an embodiment of this application;
FIG. 7 is a schematic diagram of an architecture of another OTA upgrade system according to an embodiment of this application;
FIG. 8 is a schematic flowchart of another OTA upgrade method according to an embodiment of this application;
FIG. 9 is a schematic diagram of an architecture of still another OTA upgrade system according to an embodiment of this application;
FIG. 10 is a schematic flowchart of still another OTA upgrade method according to an embodiment of this application;
FIG. 11 is a schematic diagram of an architecture of still another OTA upgrade system according to an embodiment of this application;
FIG. 12 is a schematic flowchart of still another OTA upgrade method according to an embodiment of this application;
FIG. 13 is a schematic diagram of a structure of an OTA upgrade apparatus according to an embodiment of this application;
FIG. 14 is a schematic diagram of a structure of another OTA upgrade apparatus according to an embodiment of this application;
FIG. 15 is a schematic diagram of a structure of still another OTA upgrade apparatus according to an embodiment of this application; and
FIG. 16 is a schematic diagram of a structure of still another OTA upgrade apparatus according to an embodiment of this application.

### DESCRIPTION OF EMBODIMENTS

The following describes embodiments of this application with reference to accompanying drawings in embodiments of this application. It should be noted that, in this application, the terms such as "example" or "for example" are used to represent giving an example, an illustration, or a description. Any embodiment or design scheme described as an "example" or "for example" in this application should not be construed as being more preferred or more advantageous than another embodiment or design scheme. To be precise, use of the terms such as "example" or "for example" is intended to present a related concept in a specific manner.

In embodiments of this application, "at least one" means one or more, and "a plurality of" means two or more. "At least one of the following" or a similar expression thereof indicates any combination of the following, and includes any combination of one or more of the following. For example, at least one of a, b, or c may indicate a, b, c, (a and b), (a and c), (b and c), or (a, b, and c), where a, b, and c may be singular or plural. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise specified, ordinal numbers such as "first" and "second" used in embodiments of this application are intended to distinguish between a plurality of objects, and not to limit an order, a time sequence, a priority, or a degree of importance of the plurality of objects. For example, a first detection apparatus and a second detection apparatus are merely intended to distinguish between different detection apparatuses, but do not indicate different structures, detection principles, degrees of importance, or the like of the two apparatuses.

For ease of understanding, the following first describes some terms in embodiments of this application.

### 1. Security algorithm (cryptographic algorithm)

### (1) Hash algorithm

The hash algorithm is also referred to as a hash (hash) function or a hashing algorithm. The hash algorithm may output a segment of data (for example, a character string, a number, or a file) as a hash value (the hash value may also be referred to as a hashing value, a digest value, or the like) with a preset length (for example, 80 bits or 128 bits), and it is quite difficult to find a regularity of reversion. Common hash algorithms mainly include a secure hash algorithm (secure hash algorithm 1, SHA-1), a message digest (message digest, MD) algorithm (for example, MD2, MD4, or MD5), and the like.

### (2) Encryption (encryption) algorithm

The encryption algorithm is used to protect data confidentiality (confidentiality). A common implementation is encrypting plaintext to obtain ciphertext. The encryption algorithm may include an encryption operation (for example, an elliptic point addition operation or an exclusive OR operation), or may include various algorithms with high security. Common encryption algorithms mainly include the exclusive OR operation, a data encryption standard (data encryption standard, DES) algorithm, a triple data encryption algorithm (triple data encryption algorithm, 3DES), an advanced encryption standard (advanced encryption standard, AES) algorithm, an RSA encryption algorithm, a data structure analysis (data structure analysis, DSA) algorithm, and the like.

### (3) Integrity protection algorithm

The integrity protection algorithm is an algorithm for protecting data integrity (data integrity). In some specific implementations, the integrity protection algorithm usually outputs a message authentication code (message authentication code, MAC), and the integrity protection algorithm is also referred to as a MAC algorithm in some scenarios. The integrity protection algorithm may be implemented by using a plurality of hash algorithms. An integrity protection algorithm implemented by using a hash algorithm is referred to as a hash-based message authentication code (hash-based message authentication code, HMAC) algorithm. The hash algorithm may be one of MD5, SHA-1, SHA-256, and the like. These different HMAC implementations are usually denoted as HMAC-MD5, HMAC-SHA1, HMAC-SHA256, and the like.

In some specific scenarios, an authentication and encryption algorithm may be used to encrypt data or generate a message authentication code for given original text. Therefore, the authentication and encryption algorithm may serve as an encryption algorithm or an integrity protection algorithm. For example, an AES algorithm based on a GMAC and counter encryption mode (AES-Galois/counter mode, AES-GCM) or an AES algorithm based on a CMAC and counter encryption mode (AES-CMAC/counter Mode, AES-CCM) can authenticate and encrypt a message, and can also protect integrity of the message during authentication and encryption.

### (4) Key derivation algorithm

The key derivation algorithm is used to derive one or more secret values from a secret value. For example, a new secret value DK derived from a secret value Key may be expressed as follows: DK = KDF(Key). Common key derivation algorithms include a password-based key derivation function (password-based key derivation function, PBKDF), a scrypt (scrypt) algorithm, and the like. The PBKDF algorithm further includes a first-generation PBKDF1 and a second-generation PBKDF2. Optionally, during key derivation in some KDF algorithms, a hash algorithm is used to hash an input secret value. Therefore, the KDF functions may further receive an algorithm identifier as an input, where the algorithm identifier indicates a hash algorithm to be used.

It should be noted that the KDF is applied to a process of deriving a secret value, and may also be applied to a scenario of generating authentication information or identity information, or the like.

### (5) Key-agreement algorithm

Key-agreement is a process in which both communication entities exchange some parameters to obtain a key through agreement. An algorithm used for key agreement is referred to as a key-agreement algorithm or a key exchange algorithm. Common key-agreement algorithms include a Diffie-Hellman (Diffie-Hellman, DH) algorithm, an elliptic curve cryptography (Elliptic Curve Cryptography, ECC)-based Diffie-Hellman (ECDH) algorithm, an Oakley (Oakley) algorithm, an encryption algorithm approved by the State Password Administration Committee Office (for example, SM1, SM2, SM3, or SM4), and the like.

The DH algorithm is used as an example. Two apparatuses use a prime p and a nonce g with large values to respectively generate a nonce a and a nonce b. A second apparatus sends a value A (A = ga mod p) generated by the a^{th} power of g mod p to a first apparatus. The first apparatus sends a value B (B = gb mod p) generated by the b^{th} power of g mod p to the second apparatus. Then the second apparatus calculates the a^{th} power of a received result (K = Ba mod p), and the first apparatus calculates the b^{th} power of a received result (K = Ab mod p). Because K = Ab mod p = (ga mod p)b mod p = gab mod p = (gb mod p)a mod p = Ba mod p, the first apparatus and the second apparatus obtain a same key K through calculation.

In this case, assume that an attacker attempts to calculate a by using A, g, and p based on the following formula: a = loggA mod p. Because there is no algorithm for fast calculation in a logarithmic operation and values of the prime p and the nonce g are usually large, the attacker can hardly calculate a by using A, the prime p, and the nonce g through a logarithmic operation and a modulo operation. Therefore, the key K obtained by using the DH algorithm is secure.

The ECDH algorithm is mainly implemented based on the following equation: K = k × G, where K and G are points on an elliptic curve Ep(a, b), n is an order of G (nG = O∞, where O∞ indicates a point at infinity), and k is an integer less than n. In K = kG, for given k and G, it is quite easy to calculate K according to an addition rule (for example, accumulation is performed through a point addition operation). However, on the contrary, for given K and G, it is quite difficult to calculate k. A reason lies in that, in principle, in an actual elliptic curve algorithm, p is quite large, n is also quite large, and it is a mathematical problem to calculate k points one by one and compare them with K.

It can be understood that the foregoing descriptions of the algorithms are merely intended to briefly describe an implementation principle, but do not require that a same parameter be used for implementation during use. There may alternatively be other improvements and variations during specific implementation of the algorithms. The algorithms mentioned in this application may be improved and modified algorithms. For example, the ECC may be combined with the DSA algorithm, and a combined algorithm is referred to as an ECDSA algorithm.

### 2. Freshness parameter

The freshness parameter is used to generate a key, an authentication parameter, and the like, and may also be referred to as a fresh degree parameter or a fresh parameter. The freshness parameter may include at least one of a nonce (number once, NONCE), a counter (counter), a serial number (serial number), a sequence number (sequence number), and the like. The nonce is a random value used only once (in other words, is non-repetitive). Freshness parameters generated at different moments are usually different. To be specific, a specific value of a freshness parameter changes each time a freshness parameter is generated. Therefore, a freshness parameter used to generate a key (or an authentication parameter, or the like) this time is different from a freshness parameter used to generate a key (or an authentication parameter, or the like) last time. This can improve security of the generated key (or the authentication parameter, or the like).

For example, the freshness parameter may be a nonce obtained by a node by using a random number generator (random number generator).

### 3. Digital certificate

The digital certificate (which may also be referred to as a security certificate) is a digital certificate that identifies an identity, and is usually an authoritative and impartial certificate issued by a certificate authority (Certificate Authority, CA) center or a trusted third-party device.

For example, a first terminal has a long-term key pair (a long-term public key PK and a long-term private key SK). The CA center authenticates the long-term public key PK, and the CA center encrypts the long-term public key PK together with some related information (for example, description information of a second node) by using a private key cpk of the CA center to generate a DC. The first terminal generates a signature (that is, a "private key signature") of a first public key by using a private key corresponding to the certificate, and sends the first public key, the signature of the first public key, and the DC to a first server. The first server decrypts the certificate by using a public key csk of the CA center, and may determine that the DC is issued by the CA, and determine that the long-term public key PK in the DC comes from the first terminal. In this way, a source of the long-term public key PK is authenticated. The first server verifies the signature of the first public key by using the long-term public key PK (that is, "uses a public key for signature verification"), to determine that the first public key comes from the first terminal.

The following describes a system architecture and a service scenario in embodiments of this application. It should be noted that the system architecture and the service scenario described in this application are intended to describe technical solutions in this application more clearly, and do not constitute a limitation on technical solutions provided in this application. A person of ordinary skill in the art may know that technical solutions provided in this application are also applicable to a similar technical problem with evolution of the system architecture and emergence of a new service scenario.

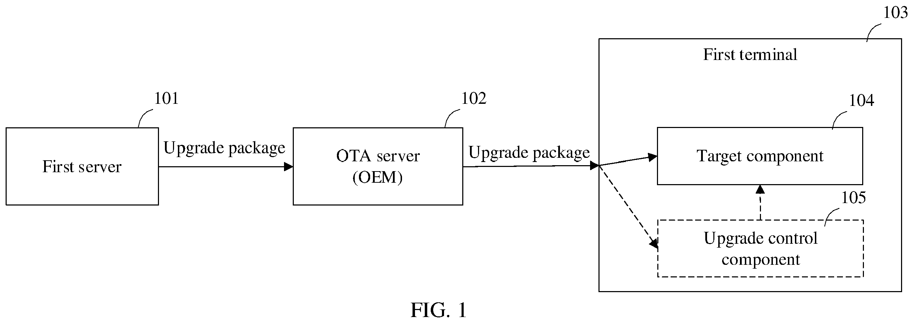

FIG. 1 is a schematic diagram of an OTA upgrade system according to an embodiment of this application. The OTA upgrade system includes a first server 101, an OTA server (server) 102, and a terminal 103.

The first server 101 is a device with a data processing capability, and may be a physical device like a host or a server, or may be a virtual device like a virtual machine or a container. It should be noted that, for ease of description, the first server 101 is referred to as a server herein, and during specific implementation, the first server 101 may be a server, or may be another device with a data processing capability. The first server 101 is a server for providing upgrade data of a target component. For example, the first server may be a server used by a supplier of the target component to maintain the target component.

The OTA server 102 is a server for exchanging information with a terminal during an OTA upgrade. Usually, the OTA server may indicate, to the terminal, that a specific component needs to be upgraded. Optionally, the OTA server may further send upgrade data of the component to the terminal. In some specific implementation scenarios, the OTA server is also referred to as an OTA cloud.

The first terminal 103 is a terminal in which the target component 104 is deployed. The first terminal 103 may obtain upgrade data from the OTA server 102, to upgrade the target component 104.

In a possible design, the target component 104 has a data sending/receiving capability, and therefore can obtain the upgrade data from the OTA server 102 to perform upgrade.

In another possible design, an upgrade control component 105 may be deployed in the first terminal 103, and the first terminal 103 may obtain the upgrade data from the OTA server 102 by using the upgrade control component 105. Further, the first terminal 103 may upgrade the target component 104 by using the upgrade control component 105, or control, by using the upgrade control component 105, the target component 104 to perform upgrade. For example, the upgrade control component 105 is configured to perform one or more of the following: receiving the upgrade data, indicating an upgrade sequence, checking an upgrade status, flashing the upgrade data, and the like. These may also be considered as controlling, by the upgrade control component 105, the target component 104 to perform upgrade.

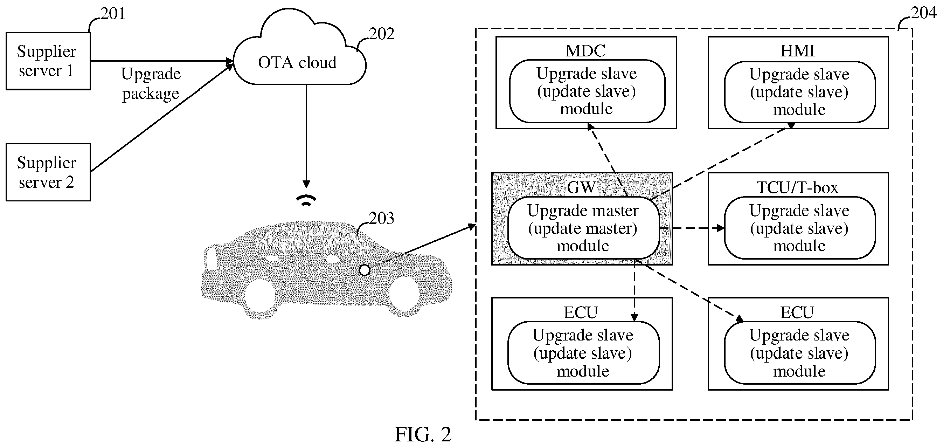

In some specific implementation scenarios, the upgrade control component 105 of the first terminal 103 may specifically further include an OTA master (Master) module and an OTA slave (slave) module. The OTA master module distributes an upgrade package obtained from the OTA server to one or more OTA slave modules in the terminal. The one or more OTA slave modules indicate a component in the terminal to install and activate the upgrade package, to complete an upgrade. For example, the first terminal is a vehicle. FIG. 2 is a schematic diagram of a possible vehicle upgrade system according to an embodiment of this application. The system includes a supplier server 201, an OTA cloud 202, and a vehicle 203. The vehicle 203 is a vehicle based on a vehicle electrical/electronic (Electrical/Electronic, E/E) architecture. Refer to an area 204. The vehicle 203 may include the following components: a mobile data center (Mobile Data Center, MDC), a human-machine interaction (Human-Machine Interaction, HMI) system, a gateway (gateway, GW), a telematics box (Telematics Box, T-box, or referred to as a TCU), an electronic control unit (Electronic Control Unit, ECU), and other modules. The GW is a core component in the vehicle electrical/electronic architecture. As a data exchange hub of an entire vehicle network, the GW may route, in different networks, data of networks such as a controller area network (Controller Area Network, CAN), a local interconnect network (Local Interconnect Network, LIN), media oriented systems transport (Media Oriented Systems Transport, MOST), and FlexRay. The MDC is an intelligent on-board computing platform of the vehicle. The T-box is mainly configured to communicate with an external environment of the vehicle, a background system, and a mobile phone application (application, APP). The HMI system is an infotainment system of the vehicle. The ECU is a vehicle-specific microcomputer controller. An upgrade master (update master, which may be considered as an OTA master) module is deployed in the GW of the vehicle 203. Upgrade slave (update slave, which may be considered as an OTA slave) modules are deployed in a plurality of components of the vehicle 203. The upgrade master module in the GW receives the upgrade package sent by the OTA cloud 202, and distributes the upgrade package to the upgrade slave modules, so that the upgrade slave modules indicate the components in the vehicle to install and activate the upgrade package, to complete upgrades of one or more components in the vehicle 203.

However, during a conventional OTA upgrade, the OTA server takes charge of an upgrade process. An OEM is responsible for maintaining the OTA server. To be specific, the OEM is responsible for reviewing a software version and distributing the upgrade package. For example, in the architecture shown in FIG. 2, the supplier server 201 needs to deliver the upgrade package to the OTA cloud 202 (the OTA server), and the OTA cloud 202 distributes the upgrade package to the vehicle 203 that needs to be upgraded. However, with development of intelligent connected vehicles, when some sensitive components, special applications, or the like need to be upgraded, if an upgrade package is submitted to an OEM for reviewing and then downloaded from an OTA server, data of the upgrade package may be leaked, a core technology and key data of a component supplier may be leaked, or confidential data may be exposed.

To resolve the foregoing problems, this application provides the following embodiments.

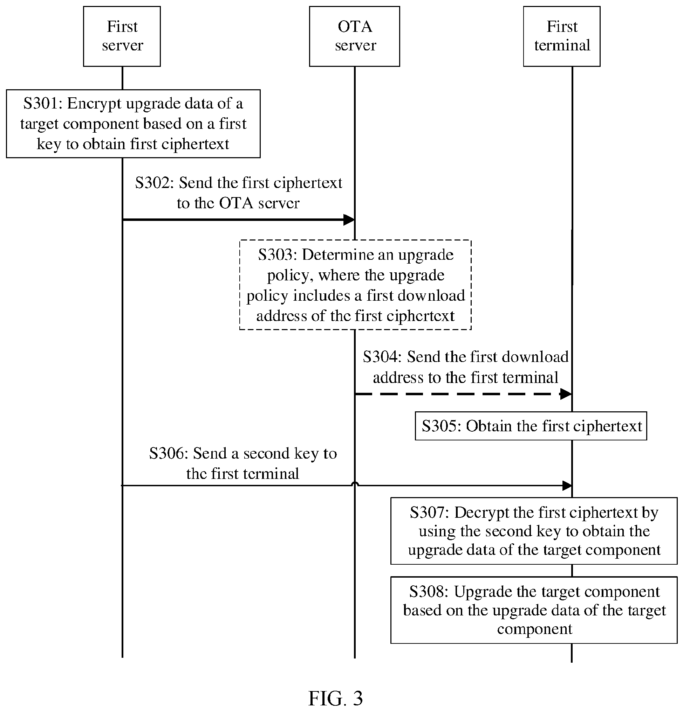

FIG. 3 is a schematic flowchart of an OTA upgrade method according to an embodiment of this application. The method includes but is not limited to the following steps.

Step S301: A first server encrypts upgrade data of a target component based on a first key to obtain first ciphertext.

The target component is a to-be-upgraded component. The target component may be deployed in one or more terminals. For example, the terminal is a vehicle. The target component may be a GW, a T-box, a VIU, a DC, an ECU, or the like in the vehicle, or may be a media device like a camera or a radar in the vehicle, or may be software such as an operating system, navigation software, map software, or monitoring software in the vehicle. The ECU includes one or more of a processor, a memory, an input/output (I/O) interface, an analog-to-digital (A/D) converter, and a large-scale integrated circuit like a shaping circuit or a drive circuit, and can implement various functions.

The first server is a server for providing the upgrade data of the target component. Further, the first server may be used by a supplier of the target component during maintenance of the target component. In this application, a possible scenario is provided as an example: The first server may be a map update server of the supplier of the target component, and is used by the supplier to update map data of the target component.

It should be noted that a server (for example, the first server or the OTA server) mentioned in embodiments of this application may be one server or a server cluster including a plurality of servers. For example, the first server may be a server cluster including a plurality of servers deployed in a distributed architecture. The cluster may include one or more of a cloud computing server, a content delivery network (Content Delivery Network, CDN) server, a network time protocol (Network Time Protocol, NTP) server, a domain name system (Domain Name System, DNS) server, and the like. The servers may coordinate with each other to jointly perform functions such as computing, data storage, and communication. For ease of description, a single server, a distributed server, a server cluster, and the like are collectively referred to as a server in embodiments of this application.

The first key may be a symmetric key or an asymmetric key. Specifically, an encryption key and a decryption key for ciphertext obtained through encryption by using an asymmetric key encryption algorithm are usually different, and an encryption key and a decryption key for ciphertext obtained through encryption by using a symmetric key encryption algorithm are the same.

The upgrade data of the target component is used to upgrade the target component. For example, the upgrade data of the target component may be an operating system update, an application software version update, a vulnerability patch, a map data update, or a calibration data update. Optionally, the upgrade data of the target component may be reviewed by the supplier of the target component.

The first server may encrypt the upgrade data of the target component based on the first key by using an encryption algorithm. For example, the obtained first ciphertext meets the following formula: the first ciphertext = Enc(the upgrade data, the first key), where Enc indicates the encryption algorithm, and may be specifically one or a combination of a DES algorithm, an AES algorithm, and the like.

Optionally, when there are a plurality of target components (for example, a first target component is deployed in a first terminal, and a second target component is deployed in a second terminal), upgrade data of the plurality of target components may be encrypted by using a same key, or may be encrypted by using different keys.

Optionally, the target component may have a plurality of pieces of upgrade data, and the first server may encrypt some of the plurality of pieces of upgrade data to obtain the first ciphertext. The first ciphertext may be packaged with other unencrypted upgrade data to obtain an upgrade package, and the upgrade package is used to upgrade the target component. In this application, a possible scenario is provided as an example: The first server applies a vulnerability patch and a map data update to the target component. In this case, the map data update may be encrypted to obtain the first ciphertext, and the vulnerability patch and the first ciphertext are packaged to obtain the upgrade package. In this way, the first server may encrypt only data that requires confidentiality protection. This reduces computation pressure.

Certainly, the first server may alternatively first package one or more pieces of upgrade data to obtain an upgrade package, and then encrypt the upgrade package. In this application, another possible scenario is provided as an example: The first server applies a vulnerability patch and a map data update to the target component. In this case, the first server may package the vulnerability patch and the map data update to obtain the upgrade package, and encrypt the upgrade package to obtain the first ciphertext.

Step S302: The first server sends the first ciphertext to an OTA server.

It can be understood that the first server sends the first ciphertext to the OTA server, and correspondingly, the OTA server receives the first ciphertext from the first server.

During specific implementation, if the first ciphertext is included in the upgrade package, the first server may send the upgrade package to the OTA server. The OTA server receives the upgrade package from the first server, to receive the first ciphertext in the upgrade package.

Optionally, the first server may further send metadata of the first ciphertext or metadata (metadata) of the upgrade package including the first ciphertext to the OTA server. The metadata is data that describes a data property of the first ciphertext or the upgrade package, for example, a file size of the first ciphertext or a version of the first ciphertext. The metadata may be used by the OTA server to determine an upgrade policy and the like.

Optionally, the embodiment shown in FIG. 3 may include one or more of step S303 and step S304. Step S303 and step S304 are specifically as follows.

Step S303: The OTA server determines an upgrade policy, where the upgrade policy includes a first download address of the first ciphertext.

Specifically, the first download address is used to download the first ciphertext or download the upgrade package including the first ciphertext. Optionally, after receiving the first ciphertext, the OTA server may allocate the first download address to the first ciphertext. Optionally, the first download address may be a uniform resource locator (uniform resource locator, URL).

Optionally, the upgrade policy may further include one or more of an upgrade rule, an upgrade condition, a download rule, and the like. The upgrade rule is used to define a rule like an upgrade sequence and whether rollback needs to be performed. The upgrade condition may include whether power supply is normal, storage space, a network status, a status of another device that has a dependency relationship, and the like. The download rule is used to define a download sequence, indicate a component to be downloaded, and the like.

Optionally, the OTA server determines the upgrade policy based on information about the first terminal and/or information about the first ciphertext (or the upgrade package including the first ciphertext). The information about the first terminal includes one or more of an identification (identification, ID), a model, version information, group information, an address, and the like of the first terminal. The information about the first ciphertext includes the metadata (in other words, a property) of the first ciphertext, for example, one or more of a version, a file size, a storage address, and the like of the first ciphertext. The information about the upgrade package including the first ciphertext includes one or more of a file size and a storage address of the upgrade package, a dependency relationship between one or more pieces of data in the upgrade package, and the like.

For example, the OTA server determines, based on version information of the target component in the first terminal and version information of the first ciphertext, that the target component in the first terminal needs to be upgraded, and then determines the first download address based on the storage address of the first ciphertext. For another example, the OTA server determines, based on the dependency relationship between the plurality of pieces of upgrade data in the upgrade package including the first ciphertext, a download sequence for downloading the plurality of pieces of upgrade data on the first terminal. For another example, the OTA server determines, based on the file size of the first ciphertext, a size of storage space used by the first terminal.

It can be understood that, during actual processing, the OTA server may determine the upgrade policy, or may not determine the upgrade policy. For example, the OTA server may send the metadata of the first ciphertext (or the upgrade package including the first ciphertext) to the first terminal, and the first terminal determines a download policy. A specific case depends on an implementation of the OTA server, a pre-agreement, or a definition in a standard.

Step S304: The OTA server sends the first download address to the first terminal.

The first download address may be used by the first terminal to download the first ciphertext from a device (for example, the OTA server, the CDN server in the plurality of servers, a NAS device, or a distributed database) that stores the first ciphertext.

Optionally, when the first download address is included in the upgrade policy, the OTA server may send the upgrade policy to the first terminal, and correspondingly, the first terminal receives the upgrade policy from the OTA server, to obtain the first download address.

Further, optionally, the OTA server may specifically send the upgrade policy to the target component, and correspondingly, the target component receives the upgrade policy from an OTA upgrade master node, to obtain the first download address.

Alternatively, the OTA server may specifically send the upgrade policy (or may send the first download address when no upgrade policy is determined) to an upgrade control component in the first terminal. Further, the upgrade control component in the first terminal may forward the upgrade policy to the target component in the first terminal. For example, as shown in FIG. 2, the upgrade control component may be the GW, and the target component may be the MDC. The OTA server may send the upgrade policy to the GW in the vehicle 203. The GW receives the upgrade policy, and forwards the upgrade policy to the MDC, so that the MDC performs upgrade based on the upgrade policy.

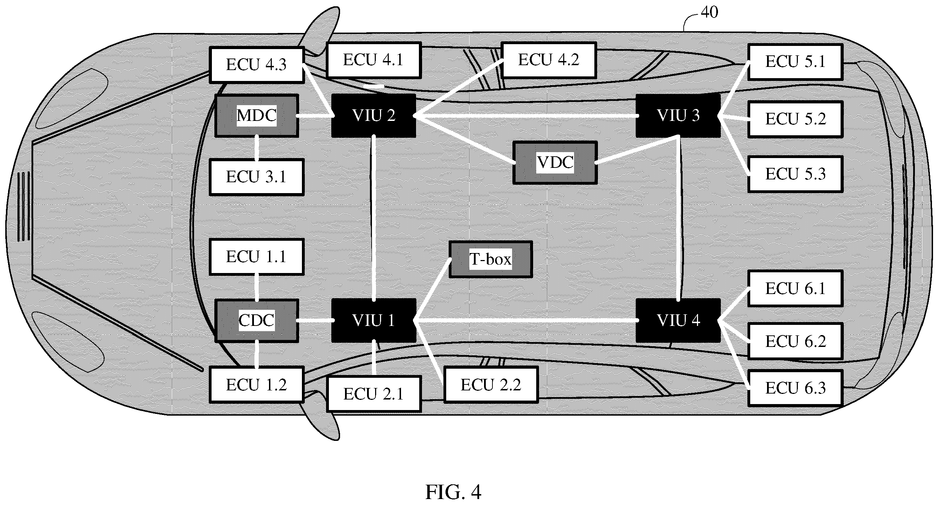

In a possible design, the upgrade control component may alternatively be another component used to control a to-be-upgraded component in a component group of the vehicle to perform upgrade. FIG. 4 shows a possible architecture of a vehicle according to an embodiment of this application. The vehicle 40 includes a plurality of component groups, and each component group includes an upgrade control component used for an OTA upgrade of a to-be-upgraded component in the upgrade control component group. For example, a vehicle integrated/integration unit (vehicle integrated/integration unit, VIU) and a component connected to the VIU may form a component group, and the VIU serves as an upgrade control component of the component group. In this application, a possible component group referred to as a group 1 is provided as an example. The group 1 includes a VIU 1, a cockpit domain controller (cockpit domain controller, CDC), an ECU 1.1, an ECU 1.2, an ECU 2.1, an ECU 2.2, and a T-box. The VIU 1 is an upgrade control component of the component group referred to as the group 1. If the target component is the CDC, the OTA server may send the first download address to the VIU 1, and correspondingly, the VIU 1 receives the first download address from the OTA server. It should be noted that, when a component group includes only one component, the component may be both an upgrade control component of the component group and a to-be-upgraded component of the component group. The component group herein is only an example, and a specific grouping status of a component group depends on a specific implementation.

Step S305: The first terminal obtains the first ciphertext.

In this application, two possible cases of obtaining the first ciphertext by the first terminal are provided as examples.

Case 1: The OTA server sends the first ciphertext to the first terminal, and correspondingly, the first terminal receives the first ciphertext from the OTA server. Specifically, the OTA server may send the first ciphertext to the first terminal through a wired link, a wireless link, or the like.

Case 2: The first terminal may download, based on the first download address, the first ciphertext from the device (for example, the OTA server, the CDN server in the plurality of servers, the NAS device, or the distributed database) that stores the first ciphertext.

Further, optionally, the first terminal may download the first ciphertext through a secure channel. The secure channel may be a transmission channel based on the secure sockets layer (Secure Sockets Layer, SSL) protocol or the transport layer security (Transport Layer Security, TLS) protocol, and is used to securely transmit data. Specifically, the secure channel may include one or more of a hypertext transfer protocol secure HTTPs-based secure channel, a transport layer security TLS protocol-based secure channel, a datagram transport layer security (Datagram Transport Layer Security, DTLS) protocol-based secure channel, and the like.

Optionally, when establishing the secure channel to the device that stores the first ciphertext, the first terminal may need to perform related security configuration, to securely transmit information. For example, the first terminal and the device that stores the first ciphertext may perform one or more of the following: determining an identity of each other based on a certificate, determining a public-private key pair used for encryption and decryption, and the like.

Optionally, the OTA server (or another device that stores the first ciphertext) does not modify or review content of the first ciphertext. This may be considered as that the OTA server (or the another device that stores the first ciphertext) transparently transmits the first ciphertext from the first server to the first terminal in a transparent transmission mode.

Step S306: The first server sends a second key to the first terminal.

Specifically, the second key is a decryption key of the first key. Ciphertext obtained through encryption by using the first key may be decrypted by using the second key to obtain plaintext. The second key and the first key may be a same key (for example, the first key and the second key are symmetric keys), or may be different keys (for example, the first key is a public key, and the second key is a private key).

It can be understood that the first server sends the second key to the first terminal, and correspondingly, the first terminal receives the second key from the first server. The second key may be used by the first terminal to decrypt the first ciphertext to obtain the upgrade data of the target component. Optionally, the first server may specifically send the second key to the target component in the first terminal, or may specifically send the second key to the upgrade control component in the first terminal.

Optionally, the first server may send the second key to the first terminal in various implementations. In this embodiment, two possible implementations are provided as examples.

Implementation 1: The first server establishes a secure channel to the first terminal, and the first server sends the second key to the first terminal through the secure channel. Specifically, the secure channel includes one or more of an HTTPs-based secure channel, a TLS-based secure channel, a DTLS-based secure channel, and the like, and is used to securely transmit data. Optionally, the first server may distribute, to the first terminal through the OTA server, an address for obtaining the second key, and the first terminal may establish the secure channel to the first server based on the address of the second key.

Further, optionally, when establishing the channel to the first server, the first terminal may need to perform related security configuration, to securely transmit information. For example, the first terminal and the first server may determine an identity of each other based on a certificate, or determine a public-private key pair for used encryption and decryption.

Optionally, during actual processing, the first server may alternatively send data to the first terminal through another communication link that supports encryption, and does not need to transmit the data through a secure channel. This may specifically depend on an implementation of the first server and the first terminal, a pre-agreement, or a definition in a standard.

It should be noted that the secure channel mentioned in this embodiment of this application may be specifically one segment of secure channel or a plurality of segments of secure channels. For example, when the target component in the first terminal supports communication with the first server, the target component may directly establish a secure channel to the first server. Therefore, the target component may receive, through the secure channel, the second key sent by the first server. In some specific implementation scenarios, if the target component cannot directly establish a secure channel to the first server but can establish a secure channel to the upgrade control component in the first terminal, the control component may establish a first segment of secure channel to the first server, and establish a second segment of secure channel to the target component, so that the target component can communicate with the first server through the first segment of secure channel and the second segment of secure channel.

Implementation 2: The first server encrypts the second key by using a first security parameter to obtain second ciphertext. The first server sends the second ciphertext to the first terminal. Further, the first terminal decrypts the second ciphertext by using a second security parameter to obtain the second key. Specifically, the second security parameter may be used to decrypt the ciphertext obtained through encryption by using the first security parameter. The first security parameter and the second security parameter may be a same parameter or different parameters. Optionally, the first security parameter may be a public key, a symmetric key, or a shared key obtained through agreement between the first server and the first terminal. For example, the first terminal (specifically, the target component, the upgrade control component, or the like in the first terminal) may determine a private key pair. The public-private key pair includes a first public key and a first private key. The first public key may be sent to the first server as the first security parameter, and the first private key is used as the second security parameter.

Optionally, the first security parameter (and the second security parameter) may be a temporary key or a one-time key (one-time key). The one-time key may be understood as a key that is used only once or that becomes invalid or is deleted after being used once. For example, the first server deletes the first security parameter after encrypting the second key by using the first security parameter, and the first terminal may delete the second security parameter after decrypting the second ciphertext by using the second security parameter. In this way, the first security parameter is used only once for encryption, and the second security parameter is used only once for decryption, so that the first security parameter and the second security parameter are not likely to be cracked, and data security is improved.

Optionally, to improve security, the first server may encrypt the second key in a one-time pad form. To be specific, when the first server sends the second key to different terminals, security parameters used to encrypt the second key are different.

Further, optionally, the first security parameter (and the second security parameter subsequently used to decrypt the second ciphertext) may be determined by the first server and the first terminal through agreement. For ease of understanding, in this application, two possible designs of determining the first security parameter are provided as examples.

Design 1: The first terminal determines a public-private key pair (including a first public key and a first private key), and a first digital certificate of the first terminal may be used to authenticate that the first public key comes from the first terminal. Specifically, the first terminal may send the first public key to the first server, and the first server authenticates the first public key by using the first digital certificate. The first public key is used as the first security parameter to encrypt the second key. Optionally, the public-private key pair may be specifically determined by the target component, the upgrade control component, or the like in the first terminal, and the first digital certificate may be specifically a digital certificate of the target component or the upgrade control component in the first terminal.

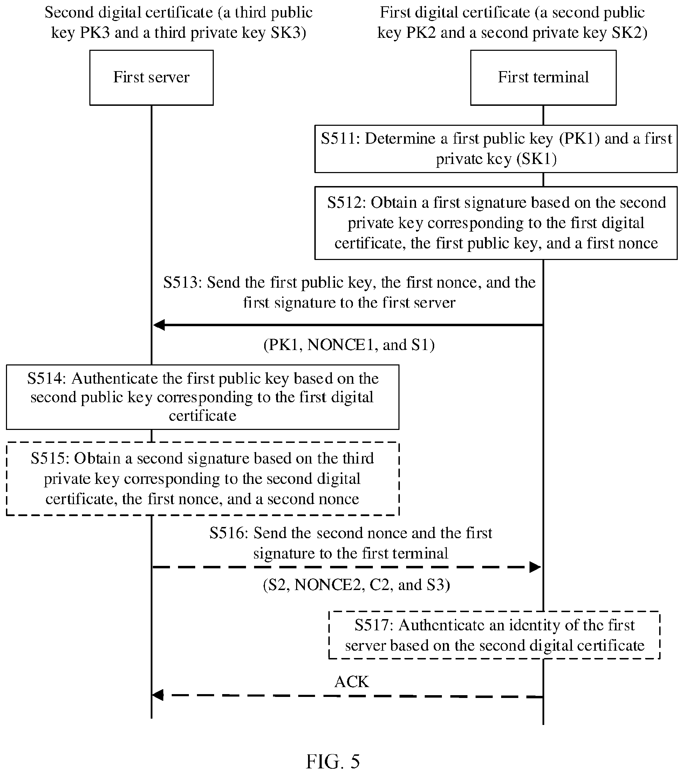

In a possible implementation scenario, the first digital certificate corresponds to a second public key and a second private key. For example, a CA may authenticate the second public key of the first terminal, and encapsulate the second public key, the information about the first terminal, and the like to obtain the first digital certificate. Another device (for example, the first server) may determine, based on the first digital certificate and the CA, that the second public key indeed comes from the first terminal. In this way, the another device (for example, the first server) can authenticate the first public key by using the second public key and the second private key that correspond to the first digital certificate. FIG. 5 is a flowchart of a method for determining the first security parameter (and the second security parameter) according to an embodiment of this application. The method may specifically include the following steps.

Step S511: The first terminal determines a first public key (PK1) and a first private key (SK1).

Optionally, the first public key and the second private key may be specifically determined by the target component in the first terminal, or the first public key and the first private key may be determined by the upgrade control component in the first terminal.

Step S512: The first terminal obtains a first signature based on the second private key corresponding to the first digital certificate, the first public key, and a first nonce.

For example, the obtained first signature S1 meets the following formula: S1 = sign(SK2, PK1, NONCE1), where sign indicates a signature algorithm, SK2 indicates the second private key corresponding to the first digital certificate, PK1 indicates the first public key, and NONCE1 indicates the first nonce (optional).

Step S513: The first terminal sends the first public key, the first nonce, and the first signature to the first server.

It should be noted that the first terminal may add the first public key, the first nonce, and the first signature to one message, or may respectively add the first public key, the first nonce, and the first signature to a plurality of messages.

The first terminal sends the first public key, the first nonce, and the first signature to the first server, and correspondingly, the first server receives the first public key, the first nonce, and the first signature from the first terminal.

Step S514: The first server authenticates the first public key based on the second public key corresponding to the first digital certificate.

The first digital certificate may be sent by the first terminal to the first server, or may be preconfigured on the first server, or may be obtained by the first server from a third-party device (for example, a network-side device or the CA center).

Specifically, the first server may unsign the first signature based on the second public key corresponding to the first digital certificate, compare an unsigned result with the first public key. If the unsigned result is the same as the first public key, the authentication on the first public key succeeds. Further, if the unsigned result is the same as the first public key, the first public key indeed comes from the first terminal and is not tampered with. If the unsigned result is different from the first public key, it indicates that the first public key received by the first server may have been tampered with or come from an untrusted source.

Optionally, the first server may obtain a second digital certificate. The second digital certificate may be used to authenticate an identity of the first server. For example, the second digital certificate may correspond to a third public key and a fourth public key. The method shown in FIG. 5 may further include the following steps.

Step S515: The first server obtains a second signature based on the third private key corresponding to the second digital certificate, the first nonce, and a second nonce.

For example, the obtained second signature S2 meets the following formula: S2 = sign(SK3, NONCE1, NONCE2), where sign indicates a signature algorithm, SK3 indicates the third private key corresponding to the third digital certificate, NONCE1 indicates the first nonce (optional), and NONCE2 indicates the second nonce (optional).

Step S516: The first server sends the second nonce and the second signature to the first terminal.

It should be noted that the first server may add the second nonce (NONCE2) and the second signature (S2) to one message, or may respectively add the second nonce and the second signature to a plurality of messages.

Optionally, the first server may add the second ciphertext (C2) to a message for sending the second signature. Further, optionally, the first server may further obtain a third signature (S3) based on the second signature, the second ciphertext, and the second nonce, where the third signature is used by the first terminal to verify the second ciphertext. For example, the third signature S3 meets the following: S3 = Sign(SK3, S2∥C2∥NONCE2), where "∥" may be a character string concatenation symbol. For meanings of the parameters, refer to the foregoing descriptions.

Step S517: The first terminal authenticates the identity of the first server based on the second digital certificate.

Specifically, the first terminal may unsign the second signature based on the third public key corresponding to the second digital certificate, and compare an unsigned result with the first nonce and the second nonce. If the unsigned result is the same as the first nonce and the second nonce, the authentication on the identity of the first server succeeds.

Optionally, when the third signature is included, the third signature may be further unsigned based on the third public key corresponding to the second digital certificate.

Optionally, if the authentication on the identity of the first server succeeds, the first terminal may feed back an acknowledgement (acknowledgement, ACK) character or other acknowledgement indication information to the first server. Optionally, the ACK character or the other acknowledgement indication information may be signed by using the second private key.

Further, if the unsigned result is different from the first nonce and the second nonce, it indicates that the first nonce, the second nonce, or the second ciphertext has been tampered with or comes from an untrusted source.

Design 2: The first server and the first terminal determine a shared key by using a key-agreement algorithm, where the shared key is used as the first security parameter (the second security parameter).

Further, in a process of determining the shared key, the first server and the first terminal may determine an identity of each other based on a pre-shared key (pre-shared key, PSK) between the first server and the first terminal. The PSK is a secret value shared by the first server and the first terminal. The first server and the first terminal may obtain the PSK in a manner of pre-definition, pre-configuration, generation through mutual agreement, or the like.

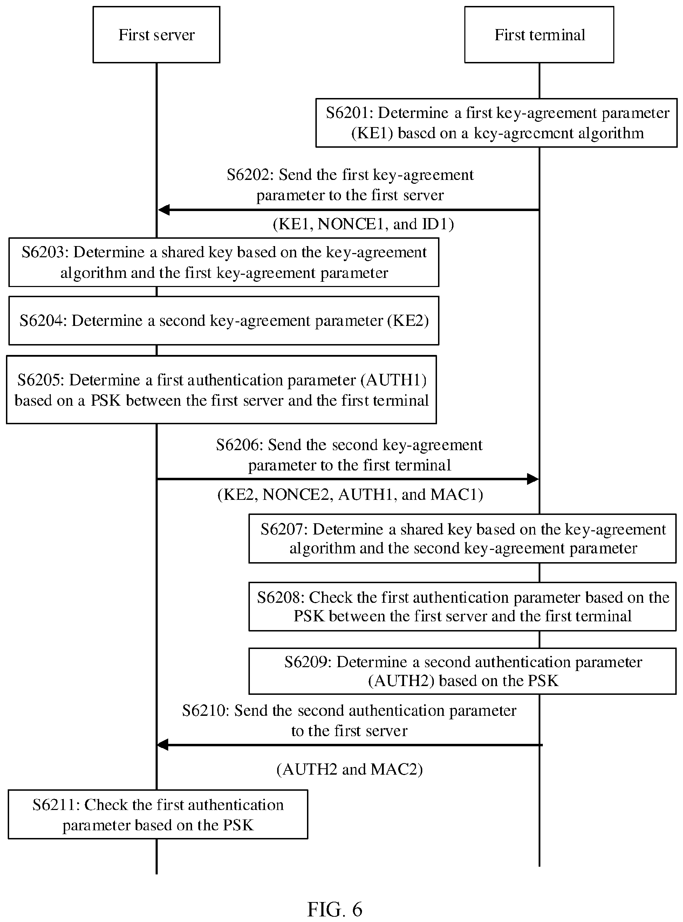

FIG. 6 is a flowchart of another method for determining the first security parameter (and the second security parameter) according to an embodiment of this application. The method may specifically include the following steps.

Step S6201: The first terminal determines a first key-agreement parameter based on the key-agreement algorithm.

The key-agreement algorithm is a key-agreement algorithm pre-agreed upon by the first terminal and the first server, or the first server may forward, to the first terminal through the OTA server, an identifier of a key-agreement algorithm supported by the first server, so that the first terminal selects a key-agreement algorithm to be used.

For example, the key-agreement algorithm is a DH algorithm. The first terminal and the first server may use a large prime p and a large nonce g as public keys. The first terminal determines a calculated value A (for example, A = g^{a} mod p) based on a private key (a) and the public keys (p and g) of the first terminal. The calculated value A may be considered as the first key-agreement parameter.

For another example, the key-agreement algorithm is an ECDH algorithm, a determined elliptic curve is Ep, and a base point is G. The first terminal obtains a calculated value A (for example, A = a × G) based on the private key (a) of the first terminal and the base point G, and sends the calculated value A to the first server. In this case, the calculated value A may be considered as the first key-agreement parameter.

Step S6202: The first terminal sends the first key-agreement parameter to the first server.

Specifically, the first terminal may send a first message to the first server, where the first message includes the first key-agreement parameter. Optionally, the first message may further include a first freshness parameter (NONCE1) determined by the first terminal, an ID of the first terminal, or the like.

The first terminal sends the first key-agreement parameter to the first server, and correspondingly, the first server receives the first key-agreement parameter from the first terminal.

Step S6203: The first server obtains a shared key (the first security parameter) based on the key-agreement algorithm.

For example, the DH algorithm is used as an example. The shared key may meet the following: Kdh = KEe^{b} mod p, where KEe indicates the first key-agreement parameter (for example, meeting the following: KEe = g^{a} mod p), and p indicates a public key used in a DH key exchange process.

For example, the ECDH algorithm is used as an example. The shared key may meet the following: Kdh = b × KEe , where KEe indicates the first key-agreement parameter (for example, meeting the following: KEe = a × G), and G indicates the base point of the elliptic curve.

Optionally, the first server may perform derivation based on the shared key Kdh, and a derived key may also be a shared key. For example, the shared key Kgt may meet the following: Kgt = KDF(Kdh, NONCE1, NOCNE2), where NONCE1 indicates the first freshness parameter, and NOCNE2 indicates a second freshness parameter. The shared key or another key derived from the shared key may be used as the first security parameter.

Further, optionally, the first server may derive one or more of an encryption key, an identity authentication key, and an integrity protection key based on the shared key. For example, the encryption key Kenc determined by the first server may meet the following:
Kenc = KDF(Kdh, NONCE1, NOCNE2, "enc")

"enc" is an optional key identifier. During specific implementation, a character string may be preconfigured or specified in a protocol as a key identifier. NONCE1 indicates the first freshness parameter, and NONCE1 indicates the second freshness parameter. NONCE1, NOCNE2, and "enc" are optional parameters. During specific implementation, other optional parameters such as the ID of the first terminal and an ID of the first server may be further included. For another example, the integrity protection key Kint determined by the first server may meet the following:
Kenc = KDF(Kdh, NONCE1, NOCNE2, "int")

"int" is an optional key identifier. During specific implementation, a character string may be preconfigured or specified in a protocol as a key identifier. NONCE1, NOCNE2, and "enc" are optional parameters. During specific implementation, other optional parameters such as the ID of the first terminal and the ID of the first server may be further included. The integrity protection key may be further used to generate a message authentication code MAC, to protect integrity of a message.

Step S6204: The first server determines a second key-agreement parameter.

For example, the key-agreement algorithm is the DH algorithm. The first server determines a calculated value B based on a private key (b) and public keys (p and g) of the first server, where the calculated value B may be considered as the second key-agreement parameter.

For another example, the key-agreement algorithm is the ECDH algorithm, a determined elliptic curve is Ep, and a base point is G. The first server obtains a calculated value B (for example, B = b × G) based on the private key (b) of the first server and the base point G, and sends the calculated value B to the first terminal. In this case, the calculated value B may be considered as the second key-agreement parameter.

Optionally, the method further includes step S6205: The first server determines a first authentication parameter based on the PSK between the first server and the first terminal.

Optionally, the first authentication parameter AUTH1 may meet the following formula: AUTH1 = (PSK, NONCE2, the first message). Further, data that participates in generation of the first authentication parameter may further include one or more of the shared key, the ID of the first terminal, an ID of a second terminal, a second message, and the like.

Step S6206: The first server sends the second key-agreement parameter to the first terminal.

Specifically, the first terminal sends the first key-agreement parameter to the first server, and correspondingly, the first server receives the first key-agreement parameter from the first terminal.

Optionally, the first server may send the second message to the first terminal, where the second message includes the second key-agreement parameter. Optionally, the second message may further include the second freshness parameter (NONCE2) determined by the first server, the first identity authentication information AUTH1, a first message authentication code MAC1, the identification (identification, ID) of the first server, and the like. The first message authentication code MAC1 is a MAC obtained by using an integrity protection algorithm (or further, by using an integrity protection key) based on some or all of data in the second message, and is used to protect integrity of the second message.

Step S6207: The first terminal determines a shared key (the second security parameter) based on the key-agreement algorithm and the second key-agreement parameter.

For specific descriptions, refer to the detailed descriptions on the first server side in step S6203.

Step S6208: The first terminal checks the first authentication parameter based on the PSK between the first server and the first terminal.

In an optional solution, according to a stipulation in a protocol, a parameter used by the first server to generate the first authentication parameter should be the same as a parameter used by the first terminal to generate check information. If the check information is the same as the first authentication parameter, it is considered that the verification succeeds.

For example, if the first authentication parameter AUTH1 meets the following: AUTH1 = KDF(PSK, NONCE2, the first message), the first terminal generates the following check information based on the PSK: check1 = KDF(PSK, NONCE2, the first message). If the check information check1 is the same as AUTH1, the check on the first authentication parameter succeeds. Further, if the check on the first authentication parameter succeeds, it indicates that a PSK on the first server is the same as a PSK on the first terminal (the identity of the first server is trusted), and the first message and the second nonce are not tampered with.

Step S6209: The first terminal determines a second authentication parameter based on the PSK.

Optionally, the second authentication parameter AUTH2 may meet the following formula: AUTH2 = (PSK, NONCE1, the second message). Further, data that participates in generation of the first authentication parameter may further include one or more of the shared key, the ID of the first terminal, the ID of the second terminal, the second message, and the like.

Step S6210: The first terminal sends the second authentication parameter to the first server.

Optionally, the first server may send a third message to the first terminal, where the third message includes the second authentication parameter. Optionally, the third message may further include a second message authentication code MAC2 determined by the first server, and the like. The second message authentication code MAC2 is used to protect integrity of the third message.

Optionally, the second authentication parameter or the third message may be further encrypted by using an encryption key.

Step S6211: The first server checks the first authentication parameter based on the PSK.

For specific descriptions, refer to the detailed descriptions on the first terminal side in step S6208.

Optionally, before sending the second key to the first terminal, the first server may receive a key obtaining request (which may be specifically a request message or information indicating a request for the second key, where a name of the information is not limited in this application) from the first terminal. Further, in response to the key obtaining request, the first server sends the second key to the first terminal or sends the second ciphertext to the second terminal. In a possible design, the first server receives the key obtaining request from the first terminal, to obtain the first security parameter (the second security parameter) by using the key-agreement algorithm. The first server encrypts the second key based on the first security parameter to obtain the second ciphertext, and sends the second ciphertext to the first terminal.

Step S307: The first terminal decrypts the first ciphertext by using the second key to obtain the upgrade data of the target component.

Optionally, the first terminal may decrypt the first ciphertext by using the second key and a decryption algorithm, to obtain the upgrade data. For example, a process of obtaining the upgrade data meets the following formula: the upgrade data = Dec(the upgrade data, the second key), where Dec indicates a decryption algorithm corresponding to the encryption algorithm Enc (usually, the encryption algorithm and the decryption algorithm are a same algorithm, or may be specifically different calculation processes in the algorithm, and different names are used herein for ease of description).

Optionally, the first server may indicate, in the upgrade policy through the OTA server, a used encryption algorithm, so that the first terminal performs decryption by using a corresponding decryption algorithm. Alternatively, the first server may send indication information when sending the second key, to indicate a used encryption algorithm, so that the first terminal performs decryption by using a corresponding decryption algorithm.

Step S308: The first terminal upgrades the target component based on the upgrade data of the target component.

During specific implementation, specifically, the upgrade control component or the target component in the first terminal may decrypt the first ciphertext, and then the upgrade control component or the target component perform upgrade based on the upgrade data. In this application, several possible implementation cases are provided as examples.

Case 1: The upgrade control component in the first terminal receives the first ciphertext sent by the OTA server, and the upgrade control component forwards the first ciphertext to the target component in the first terminal. The upgrade control component in the first terminal receives the second key sent by the first server, and the upgrade control component forwards the second key to the target component in the first terminal. The target component decrypts the first ciphertext based on the second key to obtain the upgrade data. The target component upgrades the target component based on the upgrade data. It can be understood that the target component may not have a capability of performing data transmission with the OTA server or the first server. Therefore, the upgrade control component may forward the first ciphertext and the second key, and the target component decrypts the first ciphertext, and then performs upgrade based on the upgrade data.

Case 2: The upgrade control component in the first terminal receives the first ciphertext sent by the OTA server. The upgrade control component receives the second key sent by the first server. The upgrade control component decrypts the first ciphertext based on the second key to obtain the upgrade data, and upgrades the target component based on the upgrade data. It can be understood that the target component may not have a decryption capability, and therefore the upgrade data may be obtained through decryption by the upgrade control component. Optionally, during the upgrade, the upgrade control component may upgrade the target component through data flashing or the like.

Case 3: The target component in the first terminal receives the first ciphertext sent by the OTA server, and the target component receives the second key sent by the first server. The target component decrypts the first ciphertext based on the second key to obtain the upgrade data. The target component upgrades the target component based on the upgrade data. It can be understood that, when the target component has an external communication capability and a decryption capability, the target component may be upgraded by using the method described in the case 3. For example, as shown in FIG. 4, the target component may be a VIU in a vehicle, and the VIU may perform data transmission with the OTA server and the first server. Therefore, the VIU may be upgraded by using the method described in the case 3.

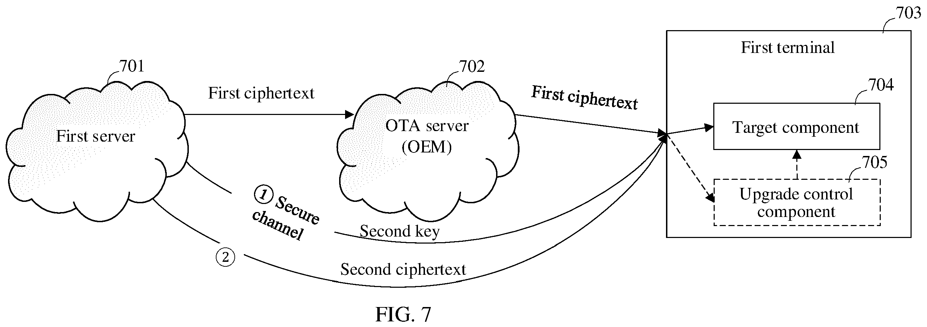

FIG. 7 is a schematic operation diagram of a possible OTA upgrade method according to an embodiment of this application. It can be learned that a first server 701 encrypts upgrade data of a target component by using a first key to obtain first ciphertext, transparently transmits the first ciphertext to a first terminal 703 (specifically, the target component 704 or an upgrade control component 705) through an OTA server 702, and then sends a second key to the first terminal 703 (specifically, the target component 704 or the upgrade control component 705). The second key may be specifically sent through a secure channel (indicated by a line identified by ① in the figure); or the second key may be encrypted by using a first security parameter, and then obtained second ciphertext is sent to the first terminal (indicated by a line identified by ② in the figure, where the first terminal 703 subsequently decrypts the second ciphertext by using a second security parameter to obtain the second key).

It can be learned that, in the embodiment shown in FIG. 3, because the upgrade data of the target component is encrypted during transmission, only the first server and the first terminal can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

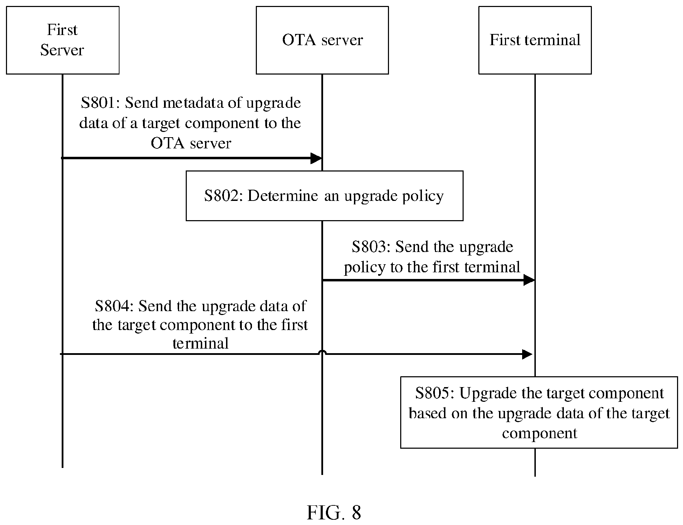

FIG. 8 is a schematic flowchart of another OTA upgrade method according to an embodiment of this application. The method includes but is not limited to the following steps.

Step S801: A first server sends metadata of upgrade data of a target component to an OTA server.

The metadata, also referred to as intermediate data or relay data, is data that describes data (data about data), and is mainly information that describes a data property (property). The metadata of the upgrade data of the target component may include one or more of a first download address, version information, a file size, and a storage location of the upgrade data, an identifier of a device that provides the upgrade data, an identifier of the target component, and the like.

Further, the metadata may be used by the OTA server to determine an upgrade policy and the like.

For related descriptions of the first server and the target component, refer to related descriptions in step S301. Details are not described herein again.

Optionally, the embodiment shown in FIG. 8 may include step S802 and step S803. Details are as follows.

Step S802: The OTA server determines an upgrade policy.

Specifically, the upgrade policy may include a first download address of first ciphertext. For related descriptions, refer to detailed descriptions in step S303. Details are not described herein again.

Step S803: The OTA server sends the upgrade policy to a first terminal.

Specifically, the OTA server sends the upgrade policy to the first terminal, and correspondingly, the first terminal receives the upgrade policy from the OTA server. For related descriptions, refer to detailed descriptions in step S304. Details are not described herein again.

Step S804: The first server sends the upgrade data of the target component to the first terminal.

Specifically, the first server sends the upgrade data of the target component to the first terminal, and correspondingly, the first terminal receives the upgrade data of the target component that is sent by the first server. Specifically, the first server may send the upgrade data of the target component to the first terminal through a wired link, a wireless link, or the like. It can be understood that the first server may send the upgrade data of the target component to the first terminal through a CDN.

Further, the first terminal may obtain the first download address of the upgrade data of the target component, where the first download address is used by the first terminal to receive the upgrade data from the first server.

Specifically, the first terminal may establish a secure channel to the first server based on the download address of the upgrade data of the target component. The first server sends the upgrade data of the target component to the first terminal through the secure channel, and correspondingly, the first terminal receives the upgrade data of the target component through the secure channel. The secure channel may include one or more of a hypertext transfer protocol secure HTTPs-based secure channel, a transport layer security TLS protocol-based secure channel, a datagram transport layer security DTLS protocol-based secure channel, and the like, and is used to securely transmit data.

Step S805: The first terminal upgrades the target component based on the upgrade data of the target component.

For details, refer to related descriptions in step S308. Details are not described herein again.

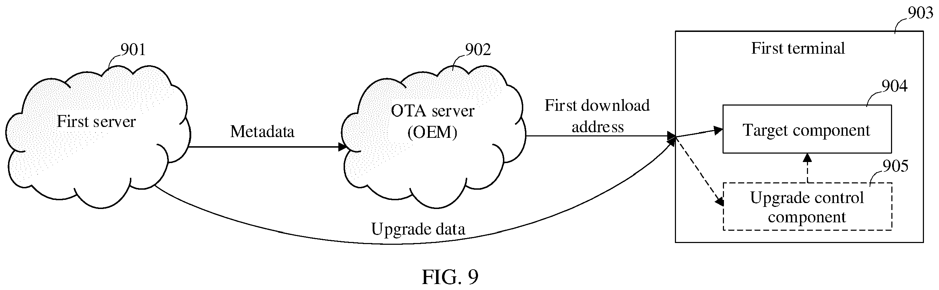

FIG. 9 is a schematic operation diagram of another possible OTA upgrade method according to an embodiment of this application. It can be learned that a first server 901 sends metadata of upgrade data of a target component to an OTA server 902, the OTA server 902 sends a first download address to a first terminal 903 (specifically, a target component 904 or an upgrade control component 905), and the first terminal 902 (specifically, the target component 904 or the upgrade control component 905) downloads the upgrade data of the target component 904 from the first server based on the first download address, to upgrade the target component 904.

It can be learned that, in the method shown in FIG. 8, the first terminal downloads the upgrade data from the first server based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from the first server, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

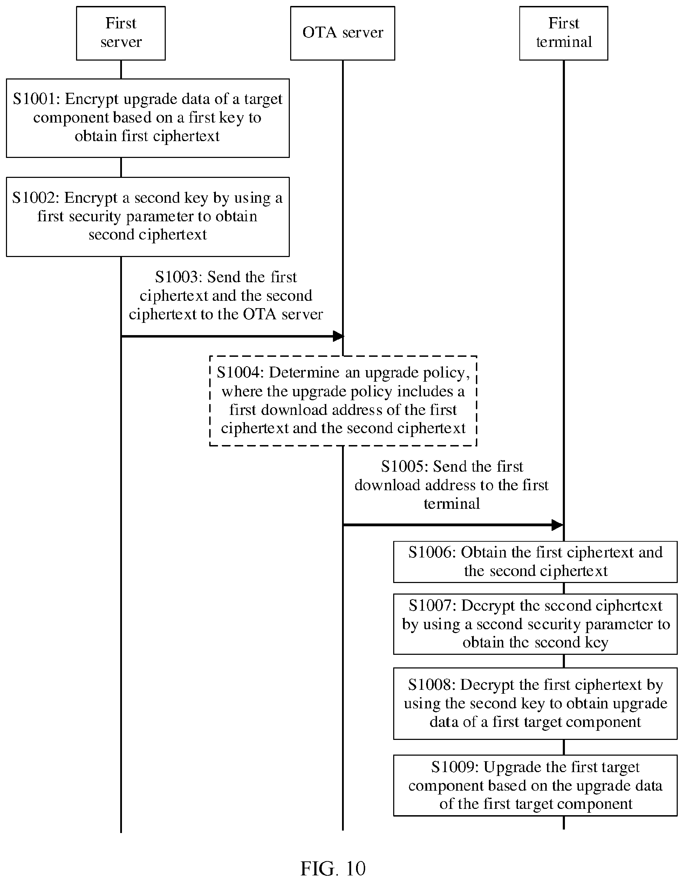

FIG. 10 is a schematic flowchart of another OTA upgrade method according to an embodiment of this application. The method includes but is not limited to the following steps.

Step S1001: A first server encrypts upgrade data of a target component based on a first key to obtain first ciphertext.

For details, refer to related descriptions in step S301. Details are not described herein again.

Step S1002: The first server encrypts a second key by using a first security parameter to obtain second ciphertext.

The first security parameter is a shared key between the first server and a first terminal (or specifically, a first target component or an upgrade control component in the first terminal), or is a first public key of the first terminal (or specifically, the first target component or the upgrade control component in the first terminal). The first target component is one of the target component.

Optionally, the first security parameter may be preset on the first server. For example, a first private key (or further, a first public key of the first private key) is preconfigured on the first target component, the first public key may be preconfigured on the first server, and the first server encrypts the second key by using the first public key to obtain the second ciphertext. Subsequently, the first target component may decrypt the second ciphertext by using the preconfigured first private key.

Alternatively, the first security parameter may alternatively be pre-determined by the first server and the first terminal through agreement. For example, the first server and the first terminal determine the first security parameter (a second security parameter) in the manner shown in FIG. 5 or FIG. 6.

The second key is a decryption key of the first key, and ciphertext obtained through encryption by using the first key may be decrypted by using the second key to obtain plaintext. The first key and the second key may be different keys (asymmetric keys), or may be a same key (symmetric keys). This specifically depends on a type of an algorithm used to obtain the first ciphertext through encryption.

Optionally, in a possible case, a second target component is configured in a second terminal, and the second target component may be one of the target component. The first server may encrypt the upgrade data of the target component by using a third security parameter to obtain third ciphertext, where the third ciphertext is used by the second terminal to upgrade the second target component. The third security parameter may be a shared key between the first server and the second terminal (or specifically, the target component in the second terminal), or may be a fourth public key of the second terminal (or specifically, the target component in the second terminal).

It should be noted that the third security parameter is usually different from the first security parameter. However, in some implementation cases, the third security parameter may alternatively be the same as the first security parameter. For example, when manufacturing the target component, a supplier preconfigures a same shared key or a same private key on a batch of target components (including the first target component and the second target component), so that the first security parameter used to encrypt the second key is the same as the third security parameter.

Step S1003: The first server sends the first ciphertext and the second ciphertext to an OTA server.

It should be noted that the first server may add the first ciphertext and the second ciphertext to one message, or may respectively add the first ciphertext and the second ciphertext to a plurality of messages. For ease of description, one action is written herein, but this does not mean that the first ciphertext and the second ciphertext are definitely sent in one message.

Optionally, in the foregoing case in which the second target component is configured in the second terminal, the first server may further send third ciphertext to the OTA server.

Optionally, the first server may further send, to the OTA server, indication information of the first terminal (or specifically, indication information of the first target component in the first terminal) corresponding to the second ciphertext, so that the first server sends the second ciphertext to the first terminal.

Optionally, the embodiment shown in FIG. 10 may include one or more of step S1004 and step S105. Step S1004 and step S1005 are specifically as follows.

Step S1004: The OTA server determines an upgrade policy, where the upgrade policy includes a first download address of the first ciphertext and the second ciphertext.

Specifically, the first download address is used to download the first ciphertext or download an upgrade package including the first ciphertext, and may be further used to download the second ciphertext. Optionally, the first download address may be a uniform resource locator (uniform resource locator, URL).

Optionally, the first download address may specifically include two addresses, where one address is used to download the first ciphertext (or download the upgrade package including the first ciphertext), and the other address is used to download the second ciphertext.

For detailed descriptions of the upgrade policy, refer to detailed descriptions in step S303. Details are not described herein again.

Optionally, in the foregoing case in which the second target component is configured in the second terminal, the OTA server may determine, based on version information of the second component in the second terminal, that the second component needs to be upgraded. In this case, the OTA server sends a download address of the first ciphertext and a download address of the third ciphertext to the second terminal.

For more other content, refer to related descriptions in step S303. Details are not described herein again.

Step S1005: The OTA server sends the first download address to the first terminal.

The first download address may be used by the first terminal to download the first ciphertext (the second ciphertext) from a device (for example, the OTA server, a CDN server in a plurality of servers, a NAS device, or a distributed database) that stores the first ciphertext (the second ciphertext).

Optionally, in the foregoing case in which the second target component is configured in the second terminal, the OTA server may further send a second download address of the third ciphertext to a third terminal, where the second download address is used by the second terminal to download the third ciphertext. Further, optionally, the download address of the first ciphertext may be the same as the download address of the first ciphertext.

Step S1006: The first terminal obtains the first ciphertext and the second ciphertext.

In this application, two possible cases of obtaining the first ciphertext and the second ciphertext by the first terminal are provided as examples.

Case 1: The OTA server sends the first ciphertext and the second ciphertext to the first terminal, and correspondingly, the first terminal receives the first ciphertext and the second ciphertext from the OTA server. Specifically, the first terminal may receive, through a wired link, a wireless link, or the like, the first ciphertext and the second ciphertext that are sent by the first server. Optionally, the first ciphertext and the second ciphertext may be carried in one message, or may be respectively carried in different messages.

Case 2: The first terminal may download, based on the first download address, the first ciphertext and the second ciphertext from the device (for example, the OTA server, the CDN server in the plurality of servers, the NAS device, or the distributed database) that stores the first ciphertext.

Further, optionally, the first terminal may download the first ciphertext (the second ciphertext) through a secure channel. Optionally, when establishing the secure channel to the device that stores the first ciphertext (the second ciphertext), the first terminal may need to perform related security configuration, to securely transmit information.

It should be noted that the OTA server (or another device that stores the first ciphertext) does not modify or review content of the first ciphertext. This may be considered as that the OTA server (or the another device that stores the first ciphertext) transparently transmits the first ciphertext (the second ciphertext) from the first server to the first terminal in a transparent transmission mode.

For specific descriptions, refer to the descriptions in step S306. Details are not described herein again.

Step S1007: The first terminal decrypts the second ciphertext by using the second security parameter to obtain the second key.

The second security parameter may be used to decrypt ciphertext obtained through encryption by using the first security parameter. Optionally, the second security parameter and the second security parameter may be the same (for example, a shared key), or may be different (for example, the first security parameter is a public key, and the second security parameter is a private key).

The first terminal may decrypt the second ciphertext based on the second security parameter by using a decryption algorithm, to obtain the second key.

Step S1008: The first terminal decrypts the first ciphertext by using the second key to obtain upgrade data of the first target component.

For details, refer to related descriptions in step S307. Details are not described herein again.

Step S1009: The first terminal upgrades the first target component based on the upgrade data of the first target component.

For details, refer to related descriptions in step S308. Details are not described herein again.

It can be understood that, optionally, in the foregoing case in which the second target component is configured in the second terminal, the third terminal may obtain the first ciphertext and the third ciphertext, decrypt the third ciphertext by using a fourth security parameter to obtain the second key, and decrypt the first ciphertext by using the second key to obtain upgrade data of the second target component.

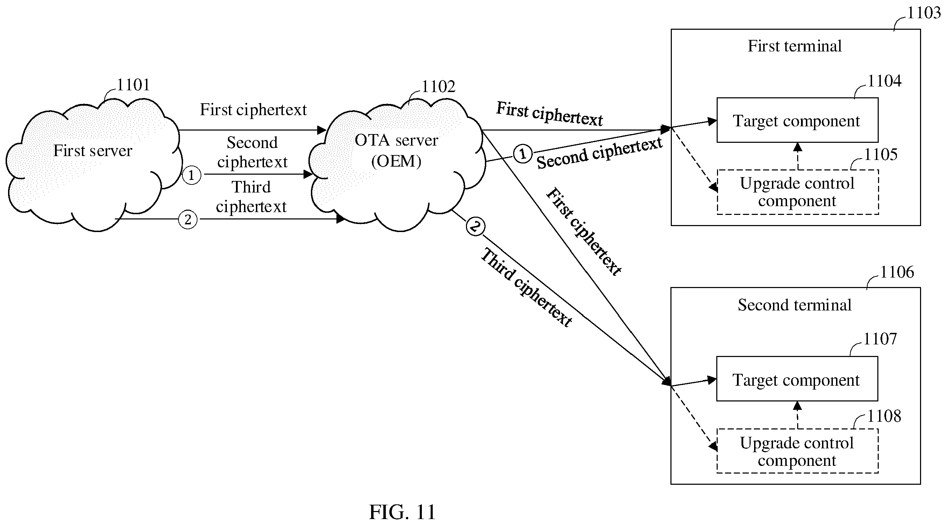

For example, FIG. 11 is a schematic operation diagram of another possible OTA upgrade system according to an embodiment of this application. A first server 1101 encrypts upgrade data of a target component (including a first target component 1104 and a second target component 1107) based on a first key to obtain first ciphertext. The first server 1101 encrypts a second key by using a first security parameter to obtain second ciphertext, and encrypts the second key by using a third security parameter to obtain third ciphertext. The first server 1101 sends the first ciphertext, the second ciphertext (indicated by a line identified by ① in the figure), and the third ciphertext (indicated by a line identified by ② in the figure) to an OTA server 1102. The OTA server 1101 sends the first ciphertext to a first terminal 1103 (specifically, the first target component 1104 or a first upgrade control component 1105) and a second terminal 1106 (specifically, the second target component 1107 or a second upgrade control component 1108). The OTA server 1101 sends the second ciphertext to the first terminal 1103, so that the first terminal 1103 decrypts the second ciphertext by using a second security parameter to obtain the second key. The OTA server sends the third ciphertext to the second terminal 1106, so that the second terminal 1106 decrypts the third ciphertext by using a fourth security parameter to obtain the second key. The second key may be used by the first terminal and the second terminal to decrypt the first ciphertext, to obtain the upgrade data for upgrading the target component.

It can be learned that, in the method shown in FIG. 10, if the second security parameter is not obtained, the second ciphertext cannot be decrypted to obtain the second key, and further, the first ciphertext cannot be decrypted to obtain the upgrade data of the target component. Therefore, security of the upgrade data of the target component is ensured.

Further, the upgrade data of the target component is not directly encrypted; instead, the second key is encrypted by using the first security parameter. A data size of a key is usually less than a data size of upgrade data. Therefore, for a supplier that has a plurality of components or a plurality of types of components to be upgraded, considering that security parameters of the plurality of components may be different, compared with a case in which upgrade data is directly encrypted by using a security parameter, a computation amount and a storage amount during encryption can be significantly reduced in this embodiment, so that upgrade efficiency is improved.

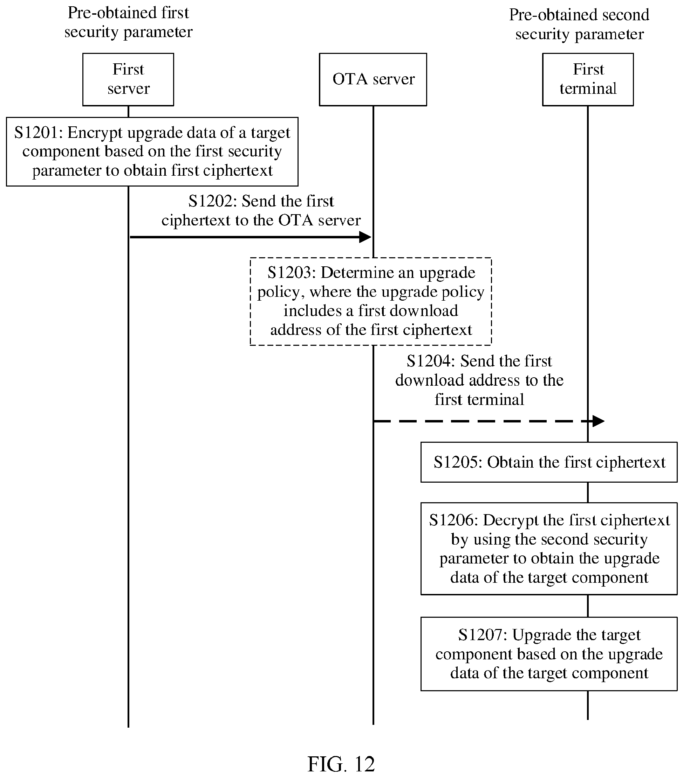

FIG. 12 is a schematic flowchart of another OTA upgrade method according to an embodiment of this application. The method includes but is not limited to the following steps.

Step S1201: A first server encrypts upgrade data of a target component by using a first security parameter to obtain first ciphertext.

The first security parameter is a shared key between the first server and a first terminal (or specifically, the target component in the first terminal), or is a first public key of the first terminal (or specifically, the target component in the first terminal). Optionally, the first security parameter may be preconfigured or predefined on the first server, or may be generated through agreement.

For example, when manufacturing the target component, a supplier configures, on the target component, a shared key (the first security parameter) between the target component and the first server. When sending the upgrade data, the first server may encrypt the upgrade data of the target component by using the preset shared key.

For another example, a first private key (or further, a first public key of the first private key) is preconfigured on the first terminal, the first server may obtain the first public key of the first terminal, and the first server encrypts the upgrade data of the target component by using the first public key to obtain the first ciphertext. Subsequently, the first terminal may decrypt the first ciphertext by using the preconfigured first private key.

It should be noted that, to reduce a computation amount, security parameters corresponding to target components of a same type or a same batch may be the same. However, security parameters corresponding to different target components may alternatively be different. This specifically depends on an implementation of the first server and the first terminal.

The target component is a to-be-upgraded component in the first terminal. For related descriptions of the first server, the upgrade data of the target component, and the like, refer to the descriptions in step S301. Details are not described herein again.

The first server may encrypt the upgrade data of the target component based on the first security parameter by using an encryption algorithm. For example, the obtained first ciphertext meets the following formula: the first ciphertext = Enc(the upgrade data, the first security parameter), where Enc indicates the encryption algorithm, and may be specifically one or a combination of a DES algorithm, an AES algorithm, and the like.

Optionally, the target component may have a plurality of pieces of upgrade data, and the first server may encrypt some of the plurality of pieces of upgrade data to obtain the first ciphertext. The first ciphertext may be packaged with other unencrypted upgrade data to obtain an upgrade package, and the upgrade package is used to upgrade the target component. In this way, the first server may encrypt only data that requires confidentiality protection. This reduces computation pressure of the server.

Certainly, the first server may alternatively first package one or more pieces of upgrade data to obtain an upgrade package, and then encrypt the upgrade package.

Step S1202: The first server sends the first ciphertext to an OTA server.

For details, refer to detailed descriptions in step S302. Details are not described herein again.

Optionally, the embodiment shown in FIG. 12 may include one or more of step S1203 and step S1204. Step S1203 and step S1204 are specifically as follows.

Step S1203: The OTA server determines an upgrade policy, where the upgrade policy includes a first download address of the first ciphertext.

For details, refer to detailed descriptions in step S303. Details are not described herein again.

Step S1204: The OTA server sends the first download address to the first terminal.

For details, refer to detailed descriptions in step S304. Details are not described herein again.

Step S1205: The first terminal obtains the first ciphertext.

For details, refer to detailed descriptions in step S305. Details are not described herein again.

Step S1206: The first terminal decrypts the first ciphertext by using a second security parameter to obtain the upgrade data of the target component.

The second security parameter may be used to decrypt ciphertext obtained through encryption by using the first security parameter. Optionally, the second security parameter and the second security parameter may be a same value (for example, a shared key), or may be different values (for example, the first security parameter is a public key, and the second security parameter is a private key).

Optionally, the first terminal may decrypt the first ciphertext based on the second security parameter by using a decryption algorithm, to obtain the upgrade data. For example, a process of obtaining the upgrade data meets the following formula: the upgrade data = Dec(the upgrade data, the second security parameter), where Dec indicates a decryption algorithm corresponding to the encryption algorithm Enc (usually, the encryption algorithm and the decryption algorithm are a same algorithm, or may be specifically different calculation processes in the algorithm, and different names are used herein for ease of description).

Optionally, the OTA server may indicate, in the upgrade policy, a used encryption algorithm, so that the first terminal performs decryption by using a corresponding decryption algorithm. Alternatively, the first server may send indication information when sending a second key, to indicate a used encryption algorithm, so that the first terminal performs decryption by using a corresponding decryption algorithm.

Step S1207: The first terminal upgrades the target component based on the upgrade data of the target component.

For details, refer to detailed descriptions in step S308. Details are not described herein again.

In the method shown in FIG. 12, the first security parameter and the second security parameter may be preconfigured or pre-obtained, the first server encrypts the upgrade data of the target component by using the first security parameter, and the first terminal decrypts the first ciphertext by using the second security parameter to obtain the upgrade data of the target component. The upgrade data of the target component is encrypted during transmission. If the second security parameter is not obtained, second ciphertext cannot be decrypted to obtain the second key, and further, the first ciphertext cannot be decrypted to obtain the upgrade data of the target component. Therefore, confidentiality of the upgrade data is ensured. When the upgrade data includes core code and a key technology implementation, core assets such as confidential data and critical code can be effectively protected.

The foregoing describes in detail the methods in embodiments of this application. The following provides an apparatus in embodiments of this application.

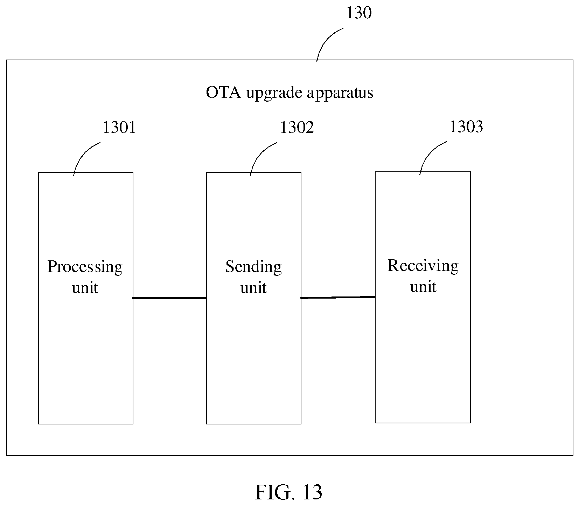

FIG. 13 is a schematic diagram of a structure of an OTA upgrade apparatus 130 according to an embodiment of this application. The OTA upgrade apparatus 130 may include one or more of a processing unit 1301, a sending unit 1302, and a receiving unit. The OTA upgrade apparatus 130 is configured to implement the foregoing OTA method, for example, may be configured to implement the OTA upgrade method shown in FIG. 3, FIG. 8, FIG. 10, or FIG. 12.

It can be understood that, in apparatus embodiments of this application, division into a plurality of units or modules is merely logical division based on functions, and is not intended to limit a specific structure of the apparatus. During specific implementation, some functional modules may be further divided into more finer-grained functional modules, or some functional modules may be combined into one functional module. However, regardless of whether the functional modules are further divided or combined, general processes performed during implementation of the OTA upgrade method are the same. For example, the sending unit 1302 and the receiving unit 1303 in the apparatus 130 may alternatively be combined into a communication unit, and the communication unit is configured to implement a function of receiving or sending data. Usually, each unit corresponds to respective program code (in other words, program instructions). When the program code corresponding to the unit runs on at least one processor, the unit is enabled to perform a corresponding process to implement a corresponding function.

In a possible design, the OTA upgrade apparatus 130 shown in FIG. 13 may be the first server in the embodiment shown in FIG. 3, or may be a component in the first server, for example, a chip or an integrated circuit.

In a possible implementation solution, the OTA upgrade apparatus 130 may include the processing unit 1301 and the sending unit 1302, where
the processing unit 1301 is configured to encrypt upgrade data of a target component based on a first key to obtain first ciphertext, where the first server is a server for providing the upgrade data of the target component;
the sending unit 1302 is configured to send the first ciphertext to an OTA server; and
the sending unit 1302 is further configured to send a second key to a first terminal in which the target component is deployed, where the second key is a decryption key corresponding to the first key.

It can be learned that, in the foregoing design, because the upgrade data of the target component is encrypted during transmission, only the OTA upgrade apparatus 130 and the first terminal can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the OTA upgrade apparatus 130 is an apparatus used by a supplier of the target component to maintain the target component.

In another possible implementation, the processing unit 1301 is further configured to establish a secure channel to the first terminal in which the target component is deployed; and
the sending unit 1302 is further configured to send the second key to the first terminal through the secure channel.

In another possible implementation, the processing unit 1301 is further configured to encrypt the second key based on a first security parameter to obtain second ciphertext, where the first security parameter is a shared key between the first server and the first terminal or a first public key of the first terminal; and
the sending unit 1302 is further configured to send the second ciphertext to the first terminal in which the target component is deployed.

In another possible implementation, the apparatus 130 further includes:
the receiving unit 1303, configured to receive a key obtaining request from the first terminal.

In another possible implementation, the first security parameter is a temporary key or a one-time key.

In another possible implementation, the first security parameter is the first public key of the first terminal, and the receiving unit 1303 is further configured to receive the first public key of the first terminal that is sent by the first terminal; and
the processing unit 1301 is further configured to authenticate the first public key of the first terminal by using a first digital certificate of the first terminal.

In another possible implementation, the first digital certificate corresponds to a second public key and a second private key, and the receiving unit 1303 is further configured to receive a first signature sent by the first terminal, where the first signature is obtained by signing the first public key by using the second private key; and
the processing unit 1301 is further configured to determine, based on the second public key, the first signature, and the first public key, that the authentication on the first public key succeeds.

In another possible implementation, the first security parameter is the shared key between the first server and the first terminal, and the processing unit 1301 is further configured to:
agree with the first terminal by using a key-agreement algorithm to obtain the shared key; and
authenticate an identity of the first terminal by using a pre-shared key PSK between the first server and the first terminal, where the PSK is a preset secret value between the first server and the target component.

In another possible implementation, the receiving unit 1303 is further configured to receive a first message sent by the first terminal, where the first information includes a first nonce;
the sending unit 1302 is further configured to send a second message to the first terminal, where the second information includes a first authentication parameter and a second nonce, and the first authentication parameter is obtained based on the first message, the second nonce, and the PSK;
the receiving unit 1303 is further configured to receive a third message sent by the first terminal, where the third information includes a second authentication parameter; and
the processing unit 1301 is specifically configured to determine, based on the second message, the first nonce, and the PSK, that authentication on an identity of the target component succeeds.

In another possible implementation, the sending unit 1302 is specifically configured to:
send the second key to an upgrade control component in the first terminal; or
send the second key to the target component in the first terminal.

It should be noted that, for specific implementations of the units in the foregoing design, reference may be made to corresponding descriptions in the embodiment shown in FIG. 3.

In a possible design, the OTA upgrade apparatus 130 shown in FIG. 13 may be the first terminal in the embodiment shown in FIG. 3, or may be a component in the first terminal, for example, a chip or an integrated circuit.

In a possible implementation solution, the OTA upgrade apparatus 130 may include the receiving unit 1303 and the processing unit 1301, where
the receiving unit 1303 is configured to receive first ciphertext sent by an OTA server, where the first ciphertext is obtained by a first server by encrypting upgrade data of a target component in the first terminal based on a first key, and the first server is a server for providing the upgrade data of the target component;
the receiving unit 1303 is further configured to receive a second key from the first server, where the second key is a decryption key corresponding to the first key;
the processing unit 1301 is further configured to decrypt the first ciphertext by using the second key to obtain the upgrade data of the target component; and
the processing unit 1301 is further configured to upgrade the target component based on the upgrade data of the target component.

It can be learned that, in the foregoing design, because the upgrade data of the target component is encrypted during transmission, only the first server and the OTA upgrade apparatus 130 can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the processing unit 1301 is further configured to establish a secure channel to the first server; and
the receiving unit 1303 is specifically configured to receive the second key of the first server through the secure channel.

In another possible implementation,
the receiving unit 1303 is specifically configured to receive second ciphertext from the first server, where the second ciphertext is obtained by encrypting the second key based on a first security parameter; and
the processing unit 1301 is further configured to decrypt the second ciphertext based on a second security parameter o obtain the second key, where the second security parameter is a shared key between the first server and the first terminal or a first private key of the first terminal.

In another possible implementation, the apparatus 130 further includes:
the sending unit 1302, configured to send a key obtaining request to the first server.

In another possible implementation, the second security parameter is a temporary key or a one-time key.

In another possible implementation, the second security parameter is the first private key corresponding to a first public key, and the first security parameter is the first public key of the first terminal; and
the first public key is authenticated by using a first digital certificate of the first terminal.

In another possible implementation, the first digital certificate corresponds to a second public key and a second private key;
the processing unit 1301 is further configured to determine the first public key and the first private key;
the processing unit 1301 is further configured to sign the first public key by using the second private key to obtain a first signature; and
the sending unit 1302 is further configured to send the first signature and the first public key to the first server, where the first signature is used by the first server to authenticate the first public key based on the second public key corresponding to the first signature certificate.

In another possible implementation, the first security parameter is the shared key between the first server and the first terminal, and the processing unit 1301 is further configured to:
agree with the first server by using a key-agreement algorithm to obtain the shared key; and
authenticate an identity of the first server by using a pre-shared key PSK between the first server and the first terminal, where the PSK is a preset secret value between the first server and the target component.

In another possible implementation, the sending unit 1302 is further configured to send a first message to the first server, where the first message includes a first nonce;
the receiving unit 1303 is further configured to receive a second message sent by the first server, where the second message includes a first authentication parameter and a second nonce;
the processing unit 1301 is specifically configured to determine, based on the first authentication parameter, the first message, the second nonce, and the PSK, that the authentication on the identity of the first server succeeds; and
the sending unit 1302 is further configured to send a third message to the first server, where the third message includes a second authentication parameter, the second authentication parameter is obtained based on the first nonce, the second message, and the PSK, and the second authentication parameter is used to authenticate an identity of the first terminal.

In another possible implementation, the OTA upgrade apparatus 130 is specifically the target component in the first terminal; or
the OTA upgrade apparatus 130 is specifically an upgrade control component in the first terminal.

It should be noted that, for specific implementations of the units in the foregoing design, reference may be made to corresponding descriptions in the embodiment shown in FIG. 3.

In a possible design, the OTA upgrade apparatus 130 shown in FIG. 13 may be the OTA server in the embodiment shown in FIG. 3, or may be a component in the OTA server, for example, a chip or an integrated circuit.

In a possible implementation solution, the OTA upgrade apparatus 130 may include the receiving unit 1303 and the sending unit 1302, where
the receiving unit 1303 is configured to receive first ciphertext from a first server, where the first ciphertext is obtained by the first server by encrypting upgrade data of a target component in a first terminal based on a first key, and the first server is a server for providing the upgrade data of the target component; and
the sending unit 1302 is configured to send an upgrade policy to the first terminal, where the upgrade policy includes a first download address of the first ciphertext.

It can be learned that, in the foregoing design, because the upgrade data of the target component is encrypted during transmission, the OTA upgrade apparatus 130 can receive the ciphertext and forward the download address, so that the first terminal obtains the first ciphertext, but the OTA upgrade apparatus 130 cannot obtain a decryption key. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the sending unit 1302 is specifically configured to send the first ciphertext to the first terminal through a secure channel, where the secure channel is jointly established by the first terminal and the OTA server based on the first download address.

In another possible implementation, the upgrade policy includes one or more of an upgrade rule, an upgrade condition, a download rule, and the like.

The upgrade rule is used to define a rule like an upgrade sequence and whether rollback needs to be performed. The upgrade condition may include whether power supply is normal, storage space, a network status, a status of another device that has a dependency relationship, and the like. The download rule is used to define a download sequence, indicate a component to be downloaded, and the like.

In another possible implementation, the apparatus 130 further includes:
the processing unit 1301, configured to determine the upgrade policy based on information about the first terminal and/or information about the first ciphertext.

For example, the OTA server determines, based on the information about the first terminal and a file size of the first ciphertext, a size of storage space used by the first terminal.

It should be noted that, for specific implementations of the units in the foregoing design, reference may be made to corresponding descriptions in the embodiment shown in FIG. 3.

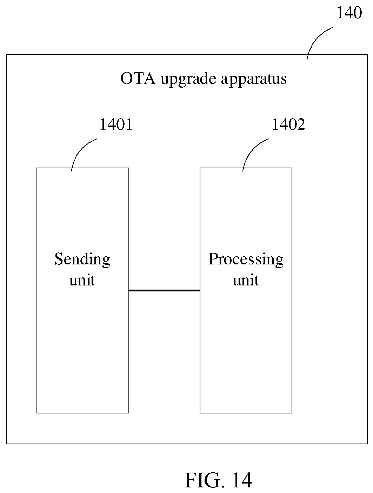

FIG. 14 is a schematic diagram of a structure of an OTA upgrade apparatus 140 according to an embodiment of this application. The OTA upgrade apparatus 140 may include at least one of a sending unit 1401 and a processing unit 1402. The OTA upgrade apparatus 140 is configured to implement the foregoing OTA method, for example, may be configured to implement the OTA upgrade method shown in FIG. 3, FIG. 8, FIG. 10, or FIG. 12.

In a possible design, the OTA upgrade apparatus 140 shown in FIG. 14 may be the first server in the embodiment shown in FIG. 8, or may be a component in the first server, for example, a chip or an integrated circuit.

In a possible implementation solution, the OTA upgrade apparatus 140 may include the sending unit 1401, where
the sending unit 1401 is configured to send metadata of upgrade data of a target component to an OTA server, where the metadata of the upgrade data includes a first download address of the upgrade data and version information of the upgrade data; and
the sending unit 1401 is further configured to send, through a secure channel, the upgrade data of the target component to a first terminal in which the target component is deployed, where the secure channel is jointly established by the first terminal and the first server based on the first download address.

It can be learned that, in the foregoing design, the OTA upgrade apparatus 140 sends the metadata of the upgrade data to the OTA server, the OTA server sends the first download address of the upgrade data to the first terminal, and the first terminal downloads the upgrade data based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from a storage device corresponding to the download address, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the OTA upgrade apparatus is an apparatus used by a supplier of the target component to maintain the target component.

In another possible implementation, the OTA upgrade apparatus further includes:
the processing unit 1402, configured to determine the metadata of the upgrade data of the target component.

In another possible implementation, the sending unit 1401 is specifically configured to:
send the upgrade data of the target component to the target component in the first terminal through the secure channel; or
send the upgrade data of the target component to an upgrade control component in the first terminal through the secure channel.

It should be noted that, for specific implementations of the units in the foregoing design, reference may be made to corresponding descriptions in the embodiment shown in FIG. 8.

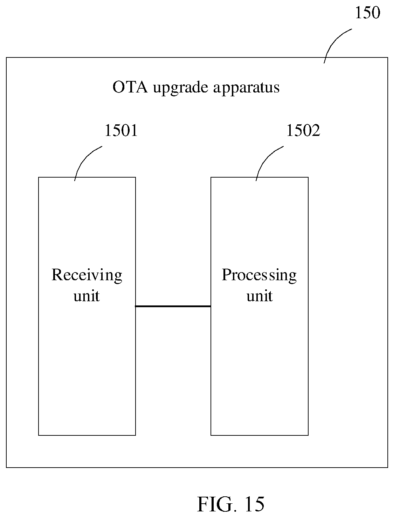

FIG. 15 is a schematic diagram of a structure of an OTA upgrade apparatus 150 according to an embodiment of this application. The OTA upgrade apparatus 150 may include a receiving unit 1501 and a processing unit 1502. The OTA upgrade apparatus 140 is configured to implement the foregoing OTA method, for example, may be configured to implement the OTA upgrade method shown in FIG. 3, FIG. 8, FIG. 10, or FIG. 12.

In a possible design, the OTA upgrade apparatus 150 shown in FIG. 15 may be the first terminal in the embodiment shown in FIG. 8, or may be a component in the first terminal, for example, a chip or an integrated circuit.

In a possible implementation solution, the OTA upgrade apparatus 150 may include the receiving unit 1501 and the processing unit 1502, where
the receiving unit 1501 is configured to receive a download policy sent by an OTA server, where the download policy includes a first download address of upgrade data of a target component, and the target component is deployed in the first terminal;
the processing unit 1502 is configured to jointly establish, with a first server, a secure channel based on the first download address, where the first server is a server for providing the upgrade data of the target component;
the processing unit 1502 is further configured to receive, through the secure channel, the upgrade data of the target component that is sent by the first server; and
the processing unit 1502 is further configured to upgrade the target component based on the upgrade data of the target component.

It can be learned that, the OTA upgrade apparatus downloads the upgrade data based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from the first server, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the OTA upgrade apparatus 150 may be specifically the target component in the first terminal; or
the OTA upgrade apparatus 150 is specifically an upgrade control component in the first terminal.

It should be noted that, for specific implementations of the units in the foregoing design, reference may be made to corresponding descriptions in the embodiment shown in FIG. 8.

In a possible design, the OTA upgrade apparatus 130 shown in FIG. 13 may be the OTA server in the embodiment shown in FIG. 8, or may be a component in the OTA server, for example, a chip or an integrated circuit.

In a possible implementation solution, the OTA upgrade apparatus 130 may include the receiving unit 1303 and the sending unit 1302, where
the receiving unit 1303 is configured to receive metadata, sent by a first server, of upgrade data of a target component, where the first server is a server for providing the upgrade data of the target component, and the metadata of the upgrade data includes a first download address of the upgrade data and version information of the upgrade data; and
the sending unit 1302 is configured to send an upgrade policy to a first terminal, where the upgrade policy includes the first download address.

It can be learned that, in the foregoing design, the OTA upgrade apparatus 130 receives the metadata of the upgrade data and forwards the download address of the upgrade data to the upgrade policy, but cannot obtain the upgrade data, so that confidentiality of the upgrade data is ensured. When the upgrade data includes core code and a key technology implementation, core assets such as confidential data and critical code can be effectively protected.

Further, because the first terminal may download the upgrade data from the first server or another storage device based on the first download address, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the apparatus 130 further includes:
the processing unit 1301, configured to determine the upgrade policy based on information about the first terminal and/or the metadata of the upgrade data.

In another possible implementation, the upgrade policy includes one or more of an upgrade rule, an upgrade condition, a download rule, and the like.

In another possible implementation, the metadata further includes a file size of the upgrade data of the target component.

It should be noted that, for specific implementations of the units in the foregoing design, reference may be made to corresponding descriptions in the embodiment shown in FIG. 8.

In a possible design, the OTA upgrade apparatus 140 shown in FIG. 14 may be the first server in the embodiment shown in FIG. 10, or may be a component in the first server, for example, a chip or an integrated circuit.

In a possible implementation solution, the OTA upgrade apparatus 140 may include the processing unit 1402 and the sending unit 1401, where
the processing unit 1402 is configured to encrypt upgrade data of a target component based on a first key to obtain first ciphertext, where the first server is a server for providing the upgrade data of the target component;
the processing unit 1402 is configured to encrypt a second key based on a first security parameter to obtain second ciphertext, where the first security parameter is a shared key between the first server and a first terminal or a first public key of the first terminal, the first terminal is a terminal in which a first target component is deployed, the first target component is one of the target component, and the second key is a decryption key of the first key; and
the sending unit 1401 is configured to send the first ciphertext and the second ciphertext to an OTA server, where the second ciphertext is used by the first terminal to decrypt the first ciphertext.

In another possible implementation, the OTA upgrade apparatus 140 is an apparatus used by a supplier of the target component to maintain the target component.

It should be noted that, for specific implementations of the units in the foregoing design, reference may be made to corresponding descriptions in the embodiment shown in FIG. 10.

In a possible design, the OTA upgrade apparatus 130 shown in FIG. 13 may be the OTA server in the embodiment shown in FIG. 10, or may be a component in the OTA server, for example, a chip or an integrated circuit.

In a possible implementation solution, the OTA upgrade apparatus 130 may include the receiving unit 1303 and the sending unit 1302, where
the receiving unit 1303 is configured to receive first ciphertext and second ciphertext that are sent by a first server, where the first ciphertext is obtained by encrypting upgrade data of a target component based on a first key, the second ciphertext is obtained by encrypting a second key based on a first security parameter, the first security parameter is a shared key between the first server and a first terminal or a first public key of the first terminal, the first terminal is a terminal in which a first target component is deployed, the first target component is one of the target component, and the second key is a decryption key of the first key; and
the sending unit 1302 is configured to send the first ciphertext and the second ciphertext to the first terminal, where the second ciphertext is used by the first terminal to decrypt the first ciphertext to obtain the upgrade data of the target component.

It can be learned that, in the foregoing design, the upgrade data is encrypted by using the first key to obtain the first ciphertext, and the second key is encrypted by using the first security parameter to obtain the second ciphertext. If a second security parameter is not obtained, the second ciphertext cannot be decrypted to obtain the second key, and further, the first ciphertext cannot be decrypted to obtain the upgrade data of the target component. Therefore, security of the upgrade data of the target component is ensured.

Further, the upgrade data of the target component is not directly encrypted; instead, the second key is encrypted by using the first security parameter. A data size of a key is usually less than a data size of upgrade data. Therefore, for a supplier that has a plurality of components or a plurality of types of components to be upgraded, considering that security parameters of the plurality of components may be different, compared with a case in which upgrade data is directly encrypted by using a security parameter, a computation amount and a storage amount during encryption can be significantly reduced in this embodiment, so that upgrade efficiency is improved.

In another possible implementation, the apparatus 130 further includes:
the processing unit 1301, configured to generate an upgrade policy based on information about the first terminal and a property of an upgrade package including the first ciphertext, where the upgrade policy includes a first download address of the first ciphertext and the second ciphertext, where
the sending unit 1302 is further configured to send the upgrade policy to the first terminal; and
the sending unit 1302 is further configured to send the first ciphertext and the second ciphertext to the first terminal through a secure channel, where the secure channel is jointly established by the first terminal and the OTA server based on the first download address.

In another possible implementation, the upgrade policy includes one or more of an upgrade rule, an upgrade condition, a download rule, and the like.

It should be noted that, for specific implementations of the units in the foregoing design, reference may be made to corresponding descriptions in the embodiment shown in FIG. 10.

In a possible design, the OTA upgrade apparatus 150 shown in FIG. 15 may be the first terminal in the embodiment shown in FIG. 10, or may be a component in the first terminal, for example, a chip or an integrated circuit. A first target component is deployed in the OTA upgrade apparatus 150 (or a device in which the OTA upgrade apparatus 150 is located), and the first target component is one of a target component.

In a possible implementation solution, the OTA upgrade apparatus 150 may include the receiving unit 1501 and the processing unit 1502, where
the receiving unit 1501 is configured to receive first ciphertext and second ciphertext that are sent by an OTA server, where the first ciphertext is obtained by a first server by encrypting upgrade data of the target component based on a first key, and the first server is a server for providing the upgrade data of the target component;
the processing unit 1502 is configured to decrypt the second ciphertext based on a second security parameter to obtain a second key, where the second key is a decryption key of the first key, and the second security parameter is a shared key between the first server and the first terminal or a first private key of the first terminal;
the processing unit 1502 is further configured to decrypt the first ciphertext based on the second key to obtain the upgrade data of the target component; and
the processing unit 1502 is further configured to upgrade the first target component based on the upgrade data of the target component.

In another possible implementation, the OTA upgrade apparatus 150 is specifically the first target component in the first terminal; or
the OTA upgrade apparatus 150 is specifically an upgrade control component in the first terminal.

In another possible implementation, the processing unit 1502 is further configured to establish a secure channel to the OTA server based on a first download address; and
the receiving unit 1501 is specifically configured to receive, through the secure channel, the first ciphertext and the second ciphertext that are sent by the OTA server.

In another possible implementation, the receiving unit 1501 is further configured to receive a download policy from the OTA server, where the download policy includes the first download address.

It should be noted that, for specific implementations of the units in the foregoing design, reference may be made to corresponding descriptions in the embodiment shown in FIG. 10.

In a possible design, the OTA upgrade apparatus 140 shown in FIG. 14 may be the first server in the embodiment shown in FIG. 12, or may be a component in the first server, for example, a chip or an integrated circuit. The OTA upgrade apparatus may be an apparatus for providing upgrade data of a target component.

In a possible implementation solution, the OTA upgrade apparatus 140 may include the processing unit 1402 and the sending unit 1401, where
the processing unit 1402 is configured to encrypt the upgrade data of the target component based on a first security parameter to obtain first ciphertext, where the first security parameter is a preset shared key between the first server and a first terminal or a preset first public key of the first terminal, the first server is a server for providing the upgrade data of the target component, and the first terminal is a terminal in which the target component is deployed; and
the sending unit 1401 is configured to send the first ciphertext to an OTA server, where the first ciphertext is sent by the OTA server to the first terminal to upgrade the target component in the first terminal.

It can be learned that, in the foregoing design, the first security parameter and a second security parameter may be preconfigured or pre-obtained, the first server encrypts the upgrade data of the target component by using the first security parameter, and the first terminal decrypts the first ciphertext by using the second security parameter to obtain the upgrade data of the target component. The upgrade data of the target component is encrypted during transmission. If the second security parameter is not obtained, the second ciphertext cannot be decrypted to obtain the second key, and further, the first ciphertext cannot be decrypted to obtain the upgrade data of the target component. Therefore, confidentiality of the upgrade data is ensured. When the upgrade data includes core code and a key technology implementation, core assets such as confidential data and critical code can be effectively protected.

It should be noted that, for specific implementations of the units in the foregoing design, reference may be made to corresponding descriptions in the embodiment shown in FIG. 12.

In a possible design, the OTA upgrade apparatus 150 shown in FIG. 15 may be the first terminal in the embodiment shown in FIG. 10, or may be a component in the first terminal, for example, a chip or an integrated circuit. A first target component is deployed in the OTA upgrade apparatus 150 (or a device in which the OTA upgrade apparatus 150 is located), and the first target component is one of a target component.

In a possible implementation solution, the OTA upgrade apparatus 150 may include the receiving unit 1501 and the processing unit 1502, where
the receiving unit 1501 is configured to receive first ciphertext sent by an OTA server, where the first ciphertext is obtained by a first server by encrypting upgrade data of the target component based on a first security parameter, the first server is a server for providing the upgrade data of the target component, and the first security parameter is a shared key between the first server and the first terminal or a first public key of the first terminal;
the processing unit 1502 is configured to decrypt the first ciphertext in an upgrade package based on a second security parameter to obtain the upgrade data of the target component, where the second security parameter is the shared key or a first private key of the first terminal; and
the processing unit 1502 is further configured to upgrade the target component based on the upgrade data of the target component.

In another possible implementation, the OTA upgrade apparatus 150 is specifically the target component in the first terminal; or
the OTA upgrade apparatus 150 is specifically an upgrade control component in the first terminal.

It should be noted that, for specific implementations of the units in the foregoing design, reference may be made to corresponding descriptions in the embodiment shown in FIG. 12.

In a possible design, the OTA upgrade apparatus 130 shown in FIG. 13 may be the OTA server in the embodiment shown in FIG. 10, or may be a component in the OTA server, for example, a chip or an integrated circuit.

In a possible implementation solution, the OTA upgrade apparatus 130 may include the receiving unit 1303 and the sending unit 1302, where
the receiving unit 1303 is configured to receive first ciphertext from a first server, where the first ciphertext is obtained by the first server by encrypting upgrade data of a target component in a first terminal based on a first security parameter, and the first server is a server for providing the upgrade data of the target component; and
the sending unit 1302 is configured to send an upgrade policy to the first terminal, where the upgrade policy includes a first download address of the first ciphertext.

In another possible implementation, the sending unit 1302 is specifically configured to send the first ciphertext to the first terminal through a secure channel, where the secure channel is jointly established by the first terminal and the OTA server based on the first download address.

In another possible implementation, the upgrade policy includes one or more of an upgrade rule, an upgrade condition, a download rule, and the like.

In another possible implementation, the apparatus 130 further includes:
the processing unit 1301, configured to determine the upgrade policy based on information about the first terminal and/or information about the first ciphertext.

It should be noted that, for specific implementations of the units in the foregoing design, reference may be made to corresponding descriptions in the embodiment shown in FIG. 12.

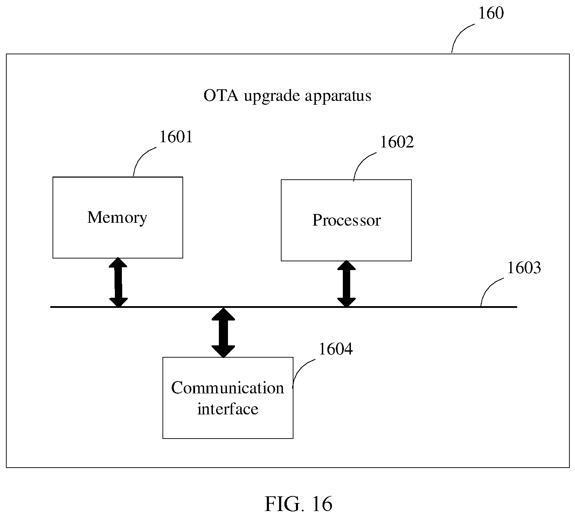

FIG. 16 is a schematic diagram of a structure of an OTA upgrade apparatus 160 according to an embodiment of this application. The apparatus 160 may include at least one memory 1601 and at least one processor 1602; optionally, may further include a bus 1603; and optionally, may further include a communication interface 1604. The memory 1601, the processor 1602, and the communication interface 1604 are connected through the bus 1603.

The memory 1601 is configured to provide storage space, and the storage space may store data such as an operating system and a computer program. The memory 1601 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

The processor 1602 is a module for performing an arithmetic operation and/or a logical operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communication interface 1604 is configured to receive data sent from an external environment and/or send data to the external environment, and may be an interface of a wired link, including an Ethernet cable or the like, or may be an interface of a wireless link (Wi-Fi, Bluetooth, universal wireless transmission, or the like). Optionally, the communication interface 1604 may further include a transmitter (for example, a radio frequency transmitter or an antenna), a receiver, or the like that is coupled to the interface.

The processor 1602 in the apparatus 160 is configured to read the computer program stored in the memory 1601, to perform the foregoing OTA upgrade method, for example, the OTA upgrade method described in the embodiment shown in any one of FIG. 3, FIG. 8, FIG. 10, or FIG. 12.

In a possible design, the OTA upgrade apparatus 160 may be the first server in the embodiment shown in FIG. 3, or may be a module in the first server, for example, a chip or an integrated circuit. The OTA upgrade apparatus 160 may be an apparatus for providing upgrade data of a target component.

The processor 1602 in the OTA upgrade apparatus 160 is configured to read the computer program stored in the memory 1601, to perform the following operations:
encrypting the upgrade data of the target component based on a first key to obtain first ciphertext, where the first server is a server for providing the upgrade data of the target component;
sending the first ciphertext to an OTA server through the communication interface 1604; and
sending, through the communication interface 1604, a second key to a first terminal in which the target component is deployed, where the second key is a decryption key corresponding to the first key.

It can be learned that, in the foregoing design, because the upgrade data of the target component is encrypted during transmission, only the OTA upgrade apparatus 160 and the first terminal can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the OTA upgrade apparatus 160 is an apparatus used by a supplier of the target component to maintain the target component.

In another possible implementation, the processor 1602 is further configured to:
establish a secure channel to the first terminal in which the target component is deployed; and
send the second key to the first terminal through the communication interface 1604 and the secure channel.

In another possible implementation, the processor 1602 is further configured to:
encrypt the second key based on a first security parameter to obtain second ciphertext, where the first security parameter is a shared key between the first server and the first terminal or a first public key of the first terminal; and
send, through the communication interface 1604, the second ciphertext to the first terminal in which the target component is deployed.

In another possible implementation, the processor 1602 is further configured to:
receive a key obtaining request from the first terminal through the communication interface 1604.

In another possible implementation, the first security parameter is a temporary key or a one-time key.

In another possible implementation, the first security parameter is the first public key of the first terminal, and the processor 1602 is further configured to authenticate the first public key of the first terminal by using a first digital certificate of the first terminal.

In another possible implementation, the first digital certificate corresponds to a second public key and a second private key, and the processor 1602 is further configured to:
receive, through the communication interface 1604, a first signature sent by the first terminal, where the first signature is obtained by signing the first public key by using the second private key; and
determine, based on the second public key, the first signature, and the first public key, that the authentication on the first public key succeeds.

In another possible implementation, the first security parameter is the shared key between the first server and the first terminal, and the processor 1602 is further configured to:
agree with the first terminal by using a key-agreement algorithm to obtain the shared key; and
authenticate an identity of the first terminal by using a pre-shared key PSK between the first server and the first terminal, where the PSK is a preset secret value between the first server and the target component.

In another possible implementation, the processor 1602 is further configured to:
receive, through the communication interface 1604, a first message sent by the first terminal, where the first information includes a first nonce;
send a second message to the first terminal through the communication interface 1604, where the second information includes a first authentication parameter and a second nonce, and the first authentication parameter is obtained based on the first message, the second nonce, and the PSK;
receive, through the communication interface 1604, a third message sent by the first terminal, where the third information includes a second authentication parameter; and
determine, based on the second message, the first nonce, and the PSK, that authentication on an identity of the target component succeeds.

In another possible implementation, the processor 1602 is further configured to:
send the second key to an upgrade control component in the first terminal through the communication interface 1604; or
send the second key to the target component in the first terminal through the communication interface 1604.

It should be noted that, for specific implementations of the units in the foregoing design, reference may be made to corresponding descriptions in the embodiment shown in FIG. 3.

In a possible design, the OTA upgrade apparatus 160 may be the first terminal in the embodiment shown in FIG. 3, or may be a module in the first terminal, for example, a chip or an integrated circuit. Optionally, a target component is deployed in the OTA upgrade apparatus 160 (or a device in which the OTA upgrade apparatus 160 is located).

The processor 1602 in the OTA upgrade apparatus 160 is configured to read the computer program stored in the memory 1601, to perform the following operations:
receiving, through the communication interface 1604, first ciphertext sent by an OTA server, where the first ciphertext is obtained by a first server by encrypting upgrade data of the target component in the first terminal based on a first key, and the first server is a server for providing the upgrade data of the target component;
receiving a second key from the first server through the communication interface 1604, where the second key is a decryption key corresponding to the first key;
decrypting the first ciphertext by using the second key to obtain the upgrade data of the target component; and
upgrading the target component based on the upgrade data of the target component.

It can be learned that, in the foregoing design, because the upgrade data of the target component is encrypted during transmission, only the first server and the OTA upgrade apparatus 160 can obtain the upgrade data based on the second key. This prevents another intermediate device from obtaining the upgrade data, and improves confidentiality of the upgrade data. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the processor 1602 is further configured to:
establish a secure channel to the first server; and
receive the second key of the first server through the communication interface 1604 and the secure channel.

In another possible implementation, the processor 1602 is further configured to:
receive second ciphertext from the first server through the communication interface 1604, where the second ciphertext is obtained by encrypting the second key based on a first security parameter; and
decrypt the second ciphertext based on a second security parameter to obtain the second key, where the second security parameter is a shared key between the first server and the first terminal or a first private key of the first terminal.

In another possible implementation, the processor 1602 is further configured to:
send a key obtaining request to the first server through the communication interface 1604.

In another possible implementation, the second security parameter is a temporary key or a one-time key.

In another possible implementation, the second security parameter is the first private key corresponding to a first public key, and the first security parameter is the first public key of the first terminal; and
the first public key is authenticated by using a first digital certificate of the first terminal.

In another possible implementation, the first digital certificate corresponds to a second public key and a second private key, and the processor 1602 is further configured to:
determine the first public key and the first private key;
sign the first public key by using the second private key to obtain a first signature; and
send the first signature and the first public key to the first server through the communication interface 1604, where the first signature is used by the first server to authenticate the first public key based on the second public key corresponding to the first signature certificate.

In another possible implementation, the first security parameter is the shared key between the first server and the first terminal, and the processor 1602 is further configured to:
agree with the first server by using a key-agreement algorithm to obtain the shared key; and
authenticate an identity of the first server by using a pre-shared key PSK between the first server and the first terminal, where the PSK is a preset secret value between the first server and the target component.

In another possible implementation, the processor 1602 is further configured to:
send a first message to the first server through the communication interface 1604, where the first message includes a first nonce;
receive, through the communication interface 1604, a second message sent by the first server, where the second message includes a first authentication parameter and a second nonce;
determine, based on the first authentication parameter, the first message, the second nonce, and the PSK, that the authentication on the identity of the first server succeeds; and
send a third message to the first server through the communication interface 1604, where the third message includes a second authentication parameter, the second authentication parameter is obtained based on the first nonce, the second message, and the PSK, and the second authentication parameter is used to authenticate an identity of the first terminal.

In another possible implementation, the OTA upgrade apparatus 160 is specifically the target component in the first terminal; or
the OTA upgrade apparatus 160 is specifically an upgrade control component in the first terminal.

It should be noted that, for specific implementations of the units in the foregoing design, reference may be made to corresponding descriptions in the embodiment shown in FIG. 3.

In a possible design, the OTA upgrade apparatus 160 may be the OTA server in the embodiment shown in FIG. 3, or may be a module in the OTA server, for example, a chip or an integrated circuit.

The processor 1602 in the OTA upgrade apparatus 160 is configured to read the computer program stored in the memory 1601, to perform the following operations:
receiving first ciphertext from a first server through the communication interface 1604, where the first ciphertext is obtained by the first server by encrypting upgrade data of a target component in a first terminal based on a first key, and the first server is a server for providing the upgrade data of the target component; and
sending an upgrade policy to the first terminal through the communication interface 1604, where the upgrade policy includes a first download address of the first ciphertext.

It can be learned that, in the foregoing design, because the upgrade data of the target component is encrypted during transmission, the OTA upgrade apparatus 160 can receive the ciphertext and forward the download address, so that the first terminal obtains the first ciphertext, but the OTA upgrade apparatus 160 cannot obtain a decryption key. When the upgrade data includes core code and a key technology implementation, core assets such as confidential data and critical code can be effectively protected.

Further, because the upgrade data is encrypted, an attacker can be prevented from tampering with the upgrade data. This improves security of an OTA upgrade.

In another possible implementation, the processor 1602 is further configured to:
send the first ciphertext to the first terminal through the communication interface 1604 and a secure channel, where the secure channel is jointly established by the first terminal and the OTA server based on the first download address.

In another possible implementation, the upgrade policy includes one or more of an upgrade rule, an upgrade condition, a download rule, and the like.

The upgrade rule is used to define a rule like an upgrade sequence and whether rollback needs to be performed. The upgrade condition may include whether power supply is normal, storage space, a network status, a status of another device that has a dependency relationship, and the like. The download rule is used to define a download sequence, indicate a component to be downloaded, and the like.

In another possible implementation, the processor 1602 is further configured to:
determine the upgrade policy based on information about the first terminal and/or information about the first ciphertext.

For example, the OTA server determines, based on the information about the first terminal and a file size of the first ciphertext, a size of storage space used by the first terminal.

It should be noted that, for specific implementations of the units in the foregoing design, reference may be made to corresponding descriptions in the embodiment shown in FIG. 3.

In a possible design, the OTA upgrade apparatus 160 may be the first server in the embodiment shown in FIG. 8, or may be a module in the first server, for example, a chip or an integrated circuit. The OTA upgrade apparatus 160 may be an apparatus for providing upgrade data of a target component.

The processor 1602 in the OTA upgrade apparatus 160 is configured to read the computer program stored in the memory 1601, to perform the following operations:
sending metadata of the upgrade data of the target component to an OTA server through the communication interface 1604, where the metadata of the upgrade data includes a first download address of the upgrade data and version information of the upgrade data; and
sending, through the communication interface 1604 and a secure channel, the upgrade data of the target component to a first terminal in which the target component is deployed, where the secure channel is jointly established by the first terminal and the first server based on the first download address.

It can be learned that, in the foregoing design, the OTA upgrade apparatus 160 sends the metadata of the upgrade data to the OTA server, the OTA server sends the first download address of the upgrade data to the first terminal, and the first terminal downloads the upgrade data based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from a storage device corresponding to the download address, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the OTA upgrade apparatus is an apparatus used by a supplier of the target component to maintain the target component.

In another possible implementation, the processor 1602 is further configured to:
determine the metadata of the upgrade data of the target component.

In another possible implementation, the processor 1602 is further configured to:
send the upgrade data of the target component to the target component in the first terminal through the communication interface 1604 and the secure channel; or
send the upgrade data of the target component to an upgrade control component in the first terminal through the communication interface 1604 and the secure channel.

It should be noted that, for specific implementations of the units in the foregoing design, reference may be made to corresponding descriptions in the embodiment shown in FIG. 8.

In a possible design, the OTA upgrade apparatus 160 may be the first terminal in the embodiment shown in FIG. 8, or may be a module in the first terminal, for example, a chip or an integrated circuit. Optionally, a target component is deployed in the OTA upgrade apparatus 160 (or a device in which the OTA upgrade apparatus 160 is located).

The processor 1602 in the OTA upgrade apparatus 160 is configured to read the computer program stored in the memory 1601, to perform the following operations:
receiving, through the communication interface 1604, a download policy sent by an OTA server, where the download policy includes a first download address of upgrade data of the target component, and the target component is deployed in the first terminal;
jointly establishing, with a first server, a secure channel based on the first download address, where the first server is a server for providing the upgrade data of the target component;
receiving, through the communication interface 1604 and the secure channel, the upgrade data of the target component that is sent by the first server; and
upgrading the target component based on the upgrade data of the target component.

It can be learned that, the OTA upgrade apparatus downloads the upgrade data based on the first download address, so that another intermediate device (for example, the OTA server) is prevented from obtaining the upgrade data of the target component, and confidentiality of the upgrade data is ensured. When the upgrade data includes core code and a key technology implementation, core assets such as confidential data and critical code can be effectively protected.

Further, because the upgrade data of the target component is directly obtained from the first server, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the OTA upgrade apparatus 160 may be specifically the target component in the first terminal; or
the OTA upgrade apparatus 160 is specifically an upgrade control component in the first terminal.

It should be noted that, for specific implementations of the units in the foregoing design, reference may be made to corresponding descriptions in the embodiment shown in FIG. 8.

In a possible design, the OTA upgrade apparatus 160 may be the OTA server in the embodiment shown in FIG. 8, or may be a module in the OTA server, for example, a chip or an integrated circuit.

The processor 1602 in the OTA upgrade apparatus 160 is configured to read the computer program stored in the memory 1601, to perform the following operations:
receiving, through the communication interface 1604, metadata, sent by a first server, of upgrade data of a target component, where the first server is a server for providing the upgrade data of the target component, and the metadata of the upgrade data includes a first download address of the upgrade data and version information of the upgrade data; and
sending an upgrade policy to a first terminal through the communication interface 1604, where the upgrade policy includes the first download address.

It can be learned that, in the foregoing design, the OTA upgrade apparatus 160 receives the metadata of the upgrade data and forwards the download address of the upgrade data to the upgrade policy, but cannot obtain the upgrade data, so that confidentiality of the upgrade data is ensured. When the upgrade data includes core code and a key technology implementation, core assets such as confidential data and critical code can be effectively protected.

Further, because the first terminal may download the upgrade data from the first server or another storage device based on the first download address, an intermediate device or the like is prevented from performing an operation like dumping or reviewing. This reduces complexity of an upgrade process and improves upgrade efficiency. According to this embodiment of this application, requirements of some components that need to be quickly upgraded can be further met.

In another possible implementation, the processor 1602 is further configured to:
determine the upgrade policy based on information about the first terminal and/or the metadata of the upgrade data.

In another possible implementation, the upgrade policy includes one or more of an upgrade rule, an upgrade condition, a download rule, and the like.

In another possible implementation, the metadata further includes a file size of the upgrade data of the target component.

It should be noted that, for specific implementations of the units in the foregoing design, reference may be made to corresponding descriptions in the embodiment shown in FIG. 8.

In a possible design, the OTA upgrade apparatus 160 may be the first server in the embodiment shown in FIG. 10, or may be a module in the first server, for example, a chip or an integrated circuit. The OTA upgrade apparatus 160 may be an apparatus for providing upgrade data of a target component.

The processor 1602 in the OTA upgrade apparatus 160 is configured to read the computer program stored in the memory 1601, to perform the following operations:
encrypting the upgrade data of the target component based on a first key to obtain first ciphertext, where the first server is a server for providing the upgrade data of the target component;
encrypting a second key based on a first security parameter to obtain second ciphertext, where the first security parameter is a shared key between the first server and a first terminal or a first public key of the first terminal, the first terminal is a terminal in which a first target component is deployed, the first target component is one of the target component, and the second key is a decryption key of the first key; and
sending the first ciphertext and the second ciphertext to an OTA server through the communication interface 1604, where the second ciphertext is used by the first terminal to decrypt the first ciphertext.

In another possible implementation, the OTA upgrade apparatus 160 is an apparatus used by a supplier of the target component to maintain the target component.

It should be noted that, for specific implementations of the units in the foregoing design, reference may be made to corresponding descriptions in the embodiment shown in FIG. 10.

In a possible design, the OTA upgrade apparatus 160 may be the OTA server in the embodiment shown in FIG. 10, or may be a module in the OTA server, for example, a chip or an integrated circuit.

The processor 1602 in the OTA upgrade apparatus 160 is configured to read the computer program stored in the memory 1601, to perform the following operations:
receiving, through the communication interface 1604, first ciphertext and second ciphertext that are sent by a first server, where the first ciphertext is obtained by encrypting upgrade data of a target component based on a first key, the second ciphertext is obtained by encrypting a second key based on a first security parameter, the first security parameter is a shared key between the first server and a first terminal or a first public key of the first terminal, the first terminal is a terminal in which a first target component is deployed, the first target component is one of the target component, and the second key is a decryption key of the first key; and
sending the first ciphertext and the second ciphertext to the first terminal through the communication interface 1604, where the second ciphertext is used by the first terminal to decrypt the first ciphertext to obtain the upgrade data of the target component.

It can be learned that, in the foregoing design, the upgrade data is encrypted by using the first key to obtain the first ciphertext, and the second key is encrypted by using the first security parameter to obtain the second ciphertext. If a second security parameter is not obtained, the second ciphertext cannot be decrypted to obtain the second key, and further, the first ciphertext cannot be decrypted to obtain the upgrade data of the target component. Therefore, security of the upgrade data of the target component is ensured.

Further, the upgrade data of the target component is not directly encrypted; instead, the second key is encrypted by using the first security parameter. A data size of a key is usually less than a data size of upgrade data. Therefore, for a supplier that has a plurality of components or a plurality of types of components to be upgraded, considering that security parameters of the plurality of components may be different, compared with a case in which upgrade data is directly encrypted by using a security parameter, a computation amount and a storage amount during encryption can be significantly reduced in this embodiment, so that upgrade efficiency is improved.

In another possible implementation, the processor 1602 is further configured to:
generate an upgrade policy based on information about the first terminal and a property of an upgrade package including the first ciphertext, where the upgrade policy includes a first download address of the first ciphertext and the second ciphertext;
send the upgrade policy to the first terminal through the communication interface 1604; and
send the first ciphertext and the second ciphertext to the first terminal through the communication interface 1604 and a secure channel, where the secure channel is jointly established by the first terminal and the OTA server based on the first download address.

In another possible implementation, the upgrade policy includes one or more of an upgrade rule, an upgrade condition, a download rule, and the like.

It should be noted that, for specific implementations of the units in the foregoing design, reference may be made to corresponding descriptions in the embodiment shown in FIG. 10.

In a possible design, the OTA upgrade apparatus 160 may be the first terminal in the embodiment shown in FIG. 10, or may be a module in the first terminal, for example, a chip or an integrated circuit. A first target component is deployed in the OTA upgrade apparatus 160 (or a device in which the OTA upgrade apparatus 160 is located), and the first target component is one of a target component.

The processor 1602 in the OTA upgrade apparatus 160 is configured to read the computer program stored in the memory 1601, to perform the following operations:
receiving first ciphertext and second ciphertext that are sent by an OTA server, where the first ciphertext is obtained by a first server by encrypting upgrade data of the target component based on a first key, and the first server is a server for providing the upgrade data of the target component;
decrypting the second ciphertext based on a second security parameter to obtain a second key, where the second key is a decryption key of the first key, and the second security parameter is a shared key between the first server and the first terminal or a first private key of the first terminal;
decrypting the first ciphertext based on the second key to obtain the upgrade data of the target component; and
upgrading the first target component based on the upgrade data of the target component.

In another possible implementation, the OTA upgrade apparatus 160 is specifically the first target component in the first terminal; or
the OTA upgrade apparatus 160 is specifically an upgrade control component in the first terminal.

In another possible implementation, the processor 1602 is further configured to:
establish a secure channel to the OTA server based on a first download address; and
receive, through the communication interface 1604 and the secure channel, the first ciphertext and the second ciphertext that are sent by the OTA server.

In another possible implementation, the processor 1602 is further configured to:
receive a download policy from the OTA server through the communication interface 1604, where the download policy includes the first download address.

It should be noted that, for specific implementations of the units in the foregoing design, reference may be made to corresponding descriptions in the embodiment shown in FIG. 10.

In a possible design, the OTA upgrade apparatus 160 may be the first server in the embodiment shown in FIG. 12, or may be a module in the first server, for example, a chip or an integrated circuit. The OTA upgrade apparatus 160 may be an apparatus for providing upgrade data of a target component.

The processor 1602 in the OTA upgrade apparatus 160 is configured to read the computer program stored in the memory 1601, to perform the following operations:
encrypting the upgrade data of the target component based on a first security parameter to obtain first ciphertext, where the first security parameter is a preset shared key between the first server and a first terminal or a preset first public key of the first terminal, the first server is a server for providing the upgrade data of the target component, and the first terminal is a terminal in which the target component is deployed; and
sending the first ciphertext to an OTA server through the communication interface 1604, where the first ciphertext is sent by the OTA server to the first terminal to upgrade the target component in the first terminal.

It can be learned that, in the foregoing design, the first security parameter and a second security parameter may be preconfigured or pre-obtained, the first server encrypts the upgrade data of the target component by using the first security parameter, and the first terminal decrypts the first ciphertext by using the second security parameter to obtain the upgrade data of the target component. The upgrade data of the target component is encrypted during transmission. If the second security parameter is not obtained, the second ciphertext cannot be decrypted to obtain the second key, and further, the first ciphertext cannot be decrypted to obtain the upgrade data of the target component. Therefore, confidentiality of the upgrade data is ensured. When the upgrade data includes core code and a key technology implementation, core assets such as confidential data and critical code can be effectively protected.

It should be noted that, for specific implementations of the units in the foregoing design, reference may be made to corresponding descriptions in the embodiment shown in FIG. 12.

In a possible design, the OTA upgrade apparatus 160 may be the first server in the embodiment shown in FIG. 12, or may be a module in the first server, for example, a chip or an integrated circuit. Optionally, a target component is deployed in the OTA upgrade apparatus 160 (or a device in which the OTA upgrade apparatus 160 is located).

The processor 1602 in the OTA upgrade apparatus 160 is configured to read the computer program stored in the memory 1601, to perform the following operations:
receiving, through the communication interface 1604, first ciphertext sent by an OTA server, where the first ciphertext is obtained by the first server by encrypting upgrade data of the target component based on a first security parameter, the first server is a server for providing the upgrade data of the target component, and the first security parameter is a shared key between the first server and a first terminal or a first public key of the first terminal;
decrypting the first ciphertext in an upgrade package based on a second security parameter to obtain the upgrade data of the target component, where the second security parameter is the shared key or a first private key of the first terminal; and
upgrading the target component based on the upgrade data of the target component.

In another possible implementation, the OTA upgrade apparatus 160 is specifically the target component in the first terminal; or
the OTA upgrade apparatus 160 is specifically an upgrade control component in the first terminal.

It should be noted that, for specific implementations of the units in the foregoing design, reference may be made to corresponding descriptions in the embodiment shown in FIG. 12.

In a possible design, the OTA upgrade apparatus 160 may be the OTA server in the embodiment shown in FIG. 12, or may be a module in the OTA server, for example, a chip or an integrated circuit. The processor 1602 in the OTA upgrade apparatus 160 is configured to read the computer program stored in the memory 1601, to perform the following operations:
receiving first ciphertext from a first server through the communication interface 1604, where the first ciphertext is obtained by the first server by encrypting upgrade data of a target component in a first terminal based on a first security parameter, and the first server is a server for providing the upgrade data of the target component; and
sending an upgrade policy to the first terminal through the communication interface 1604, where the upgrade policy includes a first download address of the first ciphertext.

In another possible implementation, the processor 1602 is further configured to:
send the first ciphertext to the first terminal through the communication interface 1604 and a secure channel, where the secure channel is jointly established by the first terminal and the OTA server based on the first download address.

In another possible implementation, the upgrade policy includes one or more of an upgrade rule, an upgrade condition, a download rule, and the like.

In another possible implementation, the processor 1602 is further configured to:
determine the upgrade policy based on information about the first terminal and/or information about the first ciphertext.

It should be noted that, for specific implementations of the units in the foregoing design, reference may be made to corresponding descriptions in the embodiment shown in FIG. 12.

An embodiment of this application further provides a chip system. The chip system includes at least one processor and a communication interface. The communication interface is configured to send and/or receive data. The at least one processor is configured to invoke a computer program stored in at least one memory, so that an apparatus in which the chip system is located implements the method on the first server side, the OTA server side, or the first terminal side in the embodiment shown in FIG. 3, FIG. 8, FIG. 10, or FIG. 12.

Further, the at least one processor may be one or a combination of processing modules such as a CPU, a GPU, an MPU, an ASIC, an FPGA, a CPLD, a coprocessor (assisting the central processing unit in corresponding processing and application), and an MCU.

An embodiment of this application further provides an OTA upgrade system. The OTA upgrade system includes a first server and a target component. The first server is configured to implement the method on the first server side in the embodiment shown in FIG. 3, FIG. 8, FIG. 10, or FIG. 12.

The target component is configured to implement the method on the first terminal side in the embodiment shown in FIG. 3, FIG. 8, FIG. 10, or FIG. 12. Further, the first server may be a server of a supplier of the target component.

An embodiment of this application further provides an OTA upgrade system. The OTA upgrade system includes an OTA server and a first terminal. The OTA server is configured to implement the method on the OTA server side in the embodiment shown in FIG. 3, FIG. 8, FIG. 10, or FIG. 12.

The first terminal is configured to implement the method on the first terminal side in the embodiment shown in FIG. 3, FIG. 8, FIG. 10, or FIG. 12.

An embodiment of this application further provides an OTA upgrade system. The OTA upgrade system includes a first server, an OTA server, and a first terminal. The first server is configured to implement the method on the first server side in the embodiment shown in FIG. 3, FIG. 8, FIG. 10, or FIG. 12.

The OTA server is configured to implement the method on the OTA server side in the embodiment shown in FIG. 3, FIG. 8, FIG. 10, or FIG. 12.

The first terminal is configured to implement the method on the first terminal side in the embodiment shown in FIG. 3, FIG. 8, FIG. 10, or FIG. 12.

An embodiment of this application further provides a computer-readable storage medium. The computer-readable storage medium stores a computer program. When the computer program runs on one or more processors, the method described in the embodiment shown in FIG. 3, FIG. 8, FIG. 10, or FIG. 12 is implemented.

An embodiment of this application further provides a computer program product. When the computer program product runs on one or more processors, the method described in the embodiment shown in FIG. 3, FIG. 8, FIG. 10, or FIG. 12 is implemented.

When the computer instructions are loaded and executed on a computer, all or some of the processes or functions described in embodiments of this application are implemented. The computer may be a general-purpose computer, a dedicated computer, a computer network, or another programmable apparatus. The computer instructions may be stored in a computer-readable storage medium, or may be transmitted through a computer-readable storage medium. The computer-readable storage medium may be any usable medium accessible to the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A sequence of the steps in the method embodiments of this application may be adjusted, or the steps may be combined or removed according to an actual requirement.
The modules in the apparatus embodiments of this application may be combined, divided, or removed according to an actual requirement.

## Claims

1. An over-the-air, OTA, download technology upgrade method, comprising:
encrypting (S301), by a first server (101), upgrade data of a target component (104) based on a first key to obtain first ciphertext, wherein the first server (101) is a server for providing the upgrade data of the target component (104);
sending (S302), by the first server (101), the first ciphertext to an OTA server (102), wherein the first ciphertext is sent by the OTA server (102) to a first terminal (103); and
sending (S306), by the first server (101), a second key to the first terminal (103) in which the target component (104) is deployed, wherein the second key is a decryption key corresponding to the first key, wherein the sending, by the first server (101), a second key to a first terminal (103) in which the target component (104) is deployed comprises:
establishing, by the first server (101), a secure channel to the first terminal (103) in which the target component is deployed; and
sending, by the first server (101), the second key to the first terminal (103) through the secure channel.

2. The method according to claim 1, wherein the first server (101) is a server used by a supplier of the target component (104) to maintain the target component (104).

3. The method according to claim 1, wherein the secure channel comprises a first secure channel and a second secure channel, the first secure channel is between the first server and a upgrade control component (705) in the first terminal, and the second secure channel is between the upgrad control componet (705) and the target component (104).

4. The method according to claim 1 or 2, wherein the sending, by the first server (101), a second key to a first terminal (103) in which the target component (104) is deployed comprises:
encrypting, by the first server (101), the second key based on a first security parameter to obtain second ciphertext, wherein the first security parameter is a shared key between the first server and the first terminal (103) or a first public key of the first terminal (103); and
sending, by the first server (101), the second ciphertext to the first terminal (103) in which the target component (104) is deployed.

5. The method according to any one of claims 1 to 4, wherein the sending, by the first server (101), a second key to a first terminal (103) in which the target component (104) is deployed comprises:
sending, by the first server (101), the second key to an upgrade control component (705) in the first terminal (103); or
sending, by the first server (101), the second key to the target component (104) in the first terminal (103).

6. An over-the-air, OTA, download technology upgrade method, comprising:
receiving, by a first terminal (103), first ciphertext sent by an OTA server (102), wherein the first ciphertext is obtained by a first server (101) by encrypting upgrade data of a target component (104) in the first terminal (103) based on a first key, and the first server (101) is a server for providing the upgrade data of the target component (104), wherein the first ciphertext is received by the OTA server (102) from the first server (101);
receiving, by the first terminal (103), a second key from the first server (101), wherein the second key is a decryption key corresponding to the first key;
decrypting, by the first terminal (103), the first ciphertext by using the second key to obtain the upgrade data of the target component (104); and
upgrading, by the first terminal (103), the target component (104) based on the upgrade data of the target component (104),
wherein the receiving, by the first terminal (103), a second key from the first server (101) comprises:
establishing, by the first terminal (103), a secure channel to the first server (101); and
receiving, by the first terminal (103), the second key of the first server (101) through the secure channel.

7. The method according to claim 6, wherein the receiving, by the first terminal (103), a second key from the first server (101) comprises:
receiving, by the first terminal (103), second ciphertext from the first server (101), wherein the second ciphertext is obtained by encrypting the second key based on a first security parameter; and
decrypting, by the first terminal (103), the second ciphertext based on a second security parameter to obtain the second key, wherein the second security parameter is a shared key between the first server (101) and the first terminal (103) or a first private key of the first terminal (103).

8. The method according to any one of claims 6 to 7, wherein
the OTA upgrade method is specifically applied to the target component (104) in the first terminal (103); or
the first terminal (103) further comprises an upgrade control component, and the OTA upgrade method is specifically applied to the upgrade control component (705).

9. An over-the-air download technology upgrade apparatus (160), comprising units configured to perform the steps in the method according to any one of claims 1 to 8, wherein the over-the-air download technology upgrade apparatus (160) comprises a first server (101) or a first terminal (103).

10. A computer-readable storage medium, comprising a program, wherein when the program is executed by a processor (1602) of a first server or of a first terminal, cause the processor to perform the method according to any one of claims 1 to 8 is performed.

## Patentansprüche

1. Drahtloses OTA-Downloadtechnologie-Aktualisierungsverfahren, umfassend:
Verschlüsseln (S301) von Aktualisierungsdaten einer Zielkomponente (104) durch einen ersten Server (101) basierend auf einem ersten Schlüssel, um einen ersten Chiffretext zu erhalten, wobei der erste Server (101) ein Server zur Bereitstellung der Aktualisierungsdaten der Zielkomponente (104) ist;
Senden (S302) des ersten Chiffretextes durch den ersten Server (101) an einen OTA-Server (102), wobei der erste Chiffretext vom OTA-Server (102) an ein erstes Endgerät (103) gesendet wird; und Senden (S306) eines zweiten Schlüssels durch den ersten Server (101) an das erste Endgerät (103), in dem die Zielkomponente (104) bereitgestellt ist, wobei der zweite Schlüssel ein zum ersten Schlüssel entsprechender Entschlüsselungsschlüssel ist, wobei das Senden eines zweiten Schlüssels durch den ersten Server (101) an ein erstes Endgerät (103), in dem die Zielkomponente (104) bereitgestellt ist, Folgendes umfasst:
Herstellen eines sicheren Kanals durch den ersten Server (101) zum ersten Endgerät (103), auf dem die Zielkomponente bereitgestellt ist; und
Senden des zweiten Schlüssel durch den ersten Server (101) über den sicheren Kanal an das erste Endgerät (103).

2. Verfahren nach Anspruch 1, wobei der erste Server (101) ein Server ist, der von einem Lieferanten der Zielkomponente (104) zur Wartung der Zielkomponente (104) verwendet wird.

3. Verfahren nach Anspruch 1, wobei der sichere Kanal einen ersten sicheren Kanal und einen zweiten sicheren Kanal umfasst, wobei sich der erste sichere Kanal zwischen dem ersten Server und einer Aktualisierungssteuerungskomponente (705) im ersten Endgerät befindet und sich der zweite sichere Kanal zwischen der Aktualisierungssteuerungskomponente (705) und der Zielkomponente (104) befindet.

4. Verfahren nach Anspruch 1 oder 2, wobei das Senden eines zweiten Schlüssels durch den ersten Server (101) an ein erstes Endgerät (103), in dem die Zielkomponente (104) bereitgestellt ist, Folgendes umfasst:
Verschlüsseln des zweiten Schlüssels durch den ersten Server (101) basierend auf einem ersten Sicherheitsparameter, um einen zweiten Chiffretext zu erhalten, wobei der erste Sicherheitsparameter ein gemeinsamer Schlüssel zwischen dem ersten Server und dem ersten Endgerät (103) oder ein erster öffentlicher Schlüssel des ersten Endgeräts (103) ist; und
Senden des zweiten Chiffretextes durch den ersten Server (101) an das erste Endgerät (103), in dem die Zielkomponente (104) bereitgestellt ist.

5. Verfahren nach einem der Anspruch 1 bis 4, wobei das Senden eines zweiten Schlüssels durch den ersten Server (101) an ein erstes Endgerät (103), in dem die Zielkomponente (104) bereitgestellt ist, Folgendes umfasst:
Senden des zweiten Schlüssels durch den ersten Server (101) an eine Aktualisierungssteuerungskomponente (705) im ersten Endgerät (103); oder
Senden des zweiten Schlüssels durch den ersten Server (101) an die Zielkomponente (104) im ersten Endgerät (103).

6. Drahtloses OTA-Downloadtechnologie-Aktualisierungsverfahren, umfassend:
Empfangen eines ersten Chiffretextes, der von einem OTA-Server (102) gesendet wurde, durch ein erstes Endgerät (103), wobei der erste Chiffretext von einem ersten Server (101) durch Verschlüsselung von Aktualisierungsdaten einer Zielkomponente (104) im ersten Endgerät (103) basierend auf einem ersten Schlüssel erhalten wird, und der erste Server (101) ein Server zum Bereitstellen der Aktualisierungsdaten der Zielkomponente (104) ist, wobei der erste Chiffretext vom OTA-Server (102) vom ersten Server (101) empfangen wird;
Empfangen eines zweiten Schlüssels vom ersten Server (101) durch das erste Endgerät (103), wobei der zweite Schlüssel ein dem ersten Schlüssel entsprechender Entschlüsselungsschlüssel ist;
Entschlüsseln des ersten Chiffretextes durch das erste Endgerät (103) unter Verwendung des zweiten Schlüssels, um die Aktualisierungsdaten der Zielkomponente (104) zu erhalten; und Aktualisieren der Zielkomponente (104) durch das erste Endgerät (103) basierend auf den Aktualisierungsdaten der Zielkomponente (104),
wobei das Empfangen eines zweiten Schlüssels vom ersten Server (101) durch das erste Endgerät (103) Folgendes umfasst:
Herstellen eines sicheren Kanals vom ersten Endgerät (103) zum ersten Server (101); und
Empfangen des zweiten Schlüssels des ersten Servers (101) durch das erste Endgerät (103) über den sicheren Kanal.

7. Verfahren nach Anspruch 6, wobei das Empfangen eines zweiten Schlüssels vom ersten Server (101) durch das erste Endgerät (103) Folgendes umfasst:
Empfangen eines zweiten Chiffretextes vom ersten Server (101) durch das erste Endgerät (103), wobei der zweite Chiffretext durch Verschlüsseln des zweiten Schlüssels basierend auf einem ersten Sicherheitsparameter erhalten wird; und
Entschlüsseln des zweiten Chiffretextes durch das erste Endgerät (103) basierend auf einem zweiten Sicherheitsparameter, um den zweiten Schlüssel zu erhalten, wobei der zweite Sicherheitsparameter ein gemeinsamer Schlüssel zwischen dem ersten Server (101) und dem ersten Endgerät (103) oder ein erster privater Schlüssel des ersten Endgeräts (103) ist.

8. Verfahren nach einem der Ansprüche 6 bis 7, wobei das OTA-Aktualisierungsverfahren speziell auf die Zielkomponente (104) im ersten Endgerät (103) angewendet wird; oder
das erste Endgerät (103) ferner eine Aktualisierungssteuerungskomponente umfasst, und das OTA-Aktualisierungsverfahren speziell auf die Aktualisierungssteuerungskomponente (705) angewendet wird.

9. Vorrichtung (160) zur Aktualisierung der drahtlosen Downloadtechnologie, die Einheiten umfasst, die dazu konfiguriert sind, die Schritte des Verfahrens gemäß einem der Ansprüche 1 bis 8 durchzuführen, wobei die Vorrichtung (160) zur Aktualisierung der drahtlosen Downloadtechnologie einen ersten Server (101) oder ein erstes Endgerät (103) umfasst.

10. Computerlesbares Speichermedium, umfassend ein Programm, wobei bei Ausführung des Programms durch einen Prozessor (1602) eines ersten Servers oder eines ersten Endgeräts der Prozessor veranlasst wird, das Verfahren gemäß einem der Ansprüche 1 bis 8 durchzuführen.

## Revendications

1. Procédé de mise à niveau de technologie de téléchargement par voie hertzienne, OTA, comprenant :
le chiffrement (S301), par un premier serveur (101), de données de mise à niveau d'un composant cible (104) sur la base d'une première clé afin d'obtenir un premier texte chiffré, dans lequel le premier serveur (101) est un serveur fournissant les données de mise à niveau du composant cible (104) ;
l'envoi (S302), par le premier serveur (101), du premier texte chiffré à un serveur OTA (102), dans lequel le premier texte chiffré est envoyé par le serveur OTA (102) à un premier terminal (103) ; et
l'envoi (S306), par le premier serveur (101), d'une seconde clé au premier terminal (103) dans lequel le composant cible (104) est déployé, dans lequel la seconde clé est une clé de déchiffrement correspondant à la première clé, dans lequel l'envoi, par le premier serveur (101), d'une seconde clé à un premier terminal (103) dans lequel le composant cible (104) est déployé comprend :
l'établissement, par le premier serveur (101), d'un canal sécurisé vers le premier terminal (103) dans lequel le composant cible est déployé ; et
l'envoi, par le premier serveur (101), de la seconde clé au premier terminal (103) via le canal sécurisé.

2. Procédé selon la revendication 1, dans lequel le premier serveur (101) est un serveur utilisé par un fournisseur du composant cible (104) pour maintenir le composant cible (104).

3. Procédé selon la revendication 1, dans lequel le canal sécurisé comprend un premier canal sécurisé et un second canal sécurisé, le premier canal sécurisé se situe entre le premier serveur et un composant de commande de mise à niveau (705) dans le premier terminal, et le second canal sécurisé se situe entre le composant de commande de mise à niveau (705) et le composant cible (104).

4. Procédé selon la revendication 1 ou 2, dans lequel l'envoi, par le premier serveur (101), d'une seconde clé à un premier terminal (103) dans lequel le composant cible (104) est déployé comprend :
le chiffrement, par le premier serveur (101), de la seconde clé sur la base d'un premier paramètre de sécurité afin d'obtenir un second texte chiffré, dans lequel le premier paramètre de sécurité est une clé partagée entre le premier serveur et le premier terminal (103) ou une première clé publique du premier terminal (103) ; et
l'envoi, par le premier serveur (101), du second texte chiffré au premier terminal (103) dans lequel le composant cible (104) est déployé.

5. Procédé selon l'une quelconque des revendications 1 à 4, dans lequel l'envoi, par le premier serveur (101), d'une seconde clé à un premier terminal (103) dans lequel le composant cible (104) est déployé comprend :
l'envoi, par le premier serveur (101), de la seconde clé à un composant de commande de mise à niveau (705) dans le premier terminal (103) ; ou
l'envoi, par le premier serveur (101), de la seconde clé au composant cible (104) dans le premier terminal (103).

6. Procédé de mise à niveau de technologie de téléchargement par voie hertzienne, OTA, comprenant :
la réception, par un premier terminal (103), d'un premier texte chiffré envoyé par un serveur OTA (102), dans lequel le premier texte chiffré est obtenu par un premier serveur (101) en chiffrant les données de mise à niveau d'un composant cible (104) dans le premier terminal (103) sur la base d'une première clé, et le premier serveur (101) est un serveur fournissant les données de mise à niveau du composant cible (104), dans lequel le premier texte chiffré est reçu par le serveur OTA (102) en provenance du premier serveur (101) ;
la réception, par le premier terminal (103), d'une seconde clé provenant du premier serveur (101), dans lequel la seconde clé est une clé de déchiffrement correspondant à la première clé ;
le déchiffrement, par le premier terminal (103), du premier texte chiffré à l'aide de la seconde clé pour obtenir les données de mise à niveau du composant cible (104) ; et
la mise à niveau, par le premier terminal (103), du composant cible (104) sur la base des données de mise à niveau du composant cible (104),
dans lequel la réception, par le premier terminal (103), d'une seconde clé provenant du premier serveur (101) comprend :
l'établissement, par le premier terminal (103), d'un canal sécurisé vers le premier serveur (101) ; et
la réception, par le premier terminal (103), de la seconde clé du premier serveur (104) via le canal sécurisé.

7. Procédé selon la revendication 6, dans lequel la réception, par le premier terminal (103), d'une seconde clé provenant du premier serveur (101) comprend :
la réception, par le premier terminal (103), d'un second texte chiffré provenant du premier serveur (101), dans lequel le second texte chiffré est obtenu en chiffrant la seconde clé sur la base d'un premier paramètre de sécurité ; et
le déchiffrement, par le premier terminal (103), du second texte chiffré sur la base d'un second paramètre de sécurité afin d'obtenir la seconde clé, dans lequel le second paramètre de sécurité est une clé partagée entre le premier serveur (101) et le premier terminal (103) ou une première clé privée du premier terminal (103).

8. Procédé selon l'une quelconque des revendications 6 et 7, dans lequel
le procédé de mise à niveau OTA est spécifiquement appliqué au composant cible (104) du premier terminal (103) ; ou
le premier terminal (103) comprend en outre un composant de commande de mise à niveau, et le procédé de mise à niveau OTA est spécifiquement appliqué au composant de commande de mise à niveau (705).

9. Appareil de mise à niveau de technologie de téléchargement par voie hertzienne (160), comprenant des unités configurées pour réaliser les étapes du procédé selon l'une quelconque des revendications 1 à 8, dans lequel l'appareil de mise à niveau de technologie de téléchargement par voie hertzienne (160) comprend un premier serveur (101) ou un premier terminal (103).

10. Support de stockage lisible par ordinateur, comprenant un programme, dans lequel lorsque le programme est exécuté par un processeur (1602) d'un premier serveur ou d'un premier terminal, amène le processeur à réaliser le procédé selon l'une quelconque des revendications 1 à 8.
